# EUROPEAN PATENT APPLICATION

(11) **EP 4 366 179 A1**
(43) Date of publication of application: **08.05.2024**
(21) Application number: 22205768.9
(22) Date of filing: 07.11.2022
(51) Int. Cl.: H04B 7/02, H04B 7/06, H04B 7/08

(54) **RADIO TRANSMISSION MANAGEMENT IN MULTI-MODEM CONFIGURATIONS**

(71) Applicant: INTEL Corporation, Santa Clara, CA 95054 (US)
(72) Inventor: SAHA, Sourav, 560087 Bangalore (IN); MITTY, Harish, 560097 Bangalore (IN); THAKUR, Jayprakash, 560035 Bangalore (IN); HEGDE, Mythili, 560078 Bangalore (IN); DAS, Sajal Kumar, 560115 Bangalore (IN); UMMELLA, Vijaya Prasad, Santa Clara, 95054 (US); JAGADISH, Arun, 560052 Bangalore (IN); KAMATH, Manjunath, 81671 Munich (DE); BEKAL MANAMOHAN, Praveen Kumar, Santa Clara, 95054 (US); BHAT, Praveen Kashyap Ananta, Bangalore (IN); R, Aneesh, 629175 Thuckalay (IN); SANGLE, Parshuram, 416234 Kolhapur (IN); MURUGAN LATHA, Padmesh, Santa Clara, 95054 (US); KAMAT, Satyajit Siddharay, 560102 Bangalore (IN); RAIGURU, Manisha, Santa Clara, 95054 (US); GARG, Isha, Santa Clara, 95054 (US); PRABHA, Abhijith, 686667 Piravom (IN); GUPTA, Jay Vishnu, Bengaluru (IN); PEDDIREDDY, Prathibha, 560087 Bengaluru (IN); PAMMI, Lakshmiravikanth, Santa Clara, 95054 (US)
(74) Representative: Viering, Jentschura & Partner mbB Patent- und Rechtsanwälte

(57) **Abstract**

Various devices and methods are disclosed for the management of radio transmissions in a multi-device environment. In a first aspect of the disclosure, a primary device controls both a display and a baseband modem of one or more secondary devices. In a second aspect of the disclosure, a device with two baseband modems uses a wireless local area network transmission to send data to a cellular network. In a third aspect of the disclosure, a primary device dynamically performs one or more network scanning operations for one or more secondary devices.

## Description

### Technical Field

Various aspects of this disclosure generally relate to improved efficiency in wireless transmissions in user devices.

### Background

According to a first aspect of the disclosure, there is a need for improved methods of antenna selection. The performance of wireless local area network communications (e.g. communications pursuant to the Wi-Fi Alliance and/or the Institute of Electrical and Electronics Engineers (IEEE) standard 802.11 (Wi-Fi)) varies significantly depending on a variety of factors, such as antenna placement within the device (e.g. within the base, within the lid), user hand position while typing or interacting with the device, signal strength between the device and a wireless access point (AP), internal radio frequency interference, and whether and/or the degree to which the lid is open or closed. As users grow accustomed to operation with multiple screens, it is becoming increasingly more common to connect a laptop to additional screens for ease-of-use. In some configurations, the laptop may be connected to additional computing devices, such as tablet computers, which have both a display and one or more baseband modems/antennas.

According to a second aspect of the disclosure, there is a need for improved power performance of user devices. In cellular systems, most of a user device's power expenditure comes from signal transmission to its respective base station (e.g. eNodeB, gNodeB, etc.). Because the base station in a cellular network is typically located far from the user device, the user device is required to transmit at a much higher power level than would be typical in a wireless local area network (WLAN) (e.g. Wi-Fi). For example, a cellular transmission may often be at approximately 33 dBm or 2 watts, whereas a typical Wi-Fi transmission may be at 20 dBm or 100 milliwatts. Otherwise stated, cellular transmissions may require approximately 20 times more power than a comparable Wi-Fi transmission.

According to a third aspect of the disclosure, many devices in a common network (e.g. devices at home and connected to a WLAN (e.g., Wi-Fi), devices in an office on a common WLAN, etc.) include both a cellular modem and WLAN modems. Conventionally, each of these devices performs various scan activities to maintain wireless communication with its respective wireless communication networks. Many of these scans are repetitive and sometimes duplicative of one another.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts a primary computing device;
FIG. 2 depicts a secondary computing device;
FIG. 3 depicts an alternative configuration of the secondary computing device;
FIG. 4 depicts a system including a primary computing device connected to a first secondary computing device and a second secondary computing device;
FIG. 5 depicts an implementation of Wi-Fi resource aggregation;
FIG. 6 depicts a primary computing device;
FIG. 7 depicts a method of controlling a secondary processing device;
FIG. 8 depicts a message flow and block diagram for transmitting a cellular message via Wi-Fi, LAN or other packet data network;
FIG. 9 depicts a user device;
FIG. 10 depicts a communications scheme for a primary device to perform scans for one or more secondary devices;
FIG. 11 depicts an exemplary working frame of a Wi-Fi modem;
FIG. 12 depicts a conventional attribution of the time blocks to various tasks;
FIG. 13 depicts a time map for a secondary device that is relying on primary device scanning; and
FIG. 14 depicts a secondary device.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

First Aspect of the Disclosure.

Computing devices (for example, but not limited to laptops) may be connected to one or more additional screens to simplify task performance. Although it is possible to connect multiple monitors to a computer, it is increasingly common to connect a primary computing device to one or more additional computing devices, wherein the one or more additional computing devices function primarily as additional screens for the primary computing device. This may occur, for example, when a laptop computer is connected to one or more tablet computers, such that the one or more tablet computers function as additional screens for the laptop.

In some configurations, these connections may occur, for example, over a Universal Serial Bus Type-C (USB-C) cable. In many instances, these connections may utilize, for example, a Thunderbolt protocol, which essentially combines a Peripheral Component Interconnect Express (PCI Express) and a DisplayPort connection into serial signals. Advantageously, such a connection permits not only the exchange of video signals from the primary computing device to the secondary computing device, but it also permits rapid data (e.g. not limited to video data) exchange between the devices. The use of a Thunderbolt connection is described for demonstrative purposes herein; however, is expressly noted that any connection permitting both exchange of video data and non-video-data may be used.

Previously it was often the case that additional screens attached to a laptop were merely monitors and were incapable of performing additional computational tasks, let alone wireless transmissions. However, as it has become possible to attach other kinds of devices, such as but not limited to tablet computers, these other devices (referred to herein as secondary devices) are often equipped with one or more baseband modems, one or more transceivers, and one or more antennas, which may be used by the primary computing device. That is, the hardware and software architecture within the secondary computing devices often permits the primary computing device to gain access to the secondary computing devices' baseband modems, which permits the primary computing device to obtain information about signal strength and network quality from the secondary computing devices.

A current convention is for each computing device to have a plurality of antennas. Very often, a computing device, such as a laptop computer or a tablet computer, includes a baseband modem (e.g. for Wi-Fi connections) and two antennas, which may be physically separated from one another. Assuming that a primary device is connected to 2 secondary devices (for example to tablet computers), the primary computing device effectively has access to its own baseband modem, the baseband modem of the first secondary device, and the baseband modem of the second secondary device. Furthermore, the primary computing device has access to its own 2 antennas, the 2 antennas of the first secondary device, and the 2 antennas of the second secondary device. Depending on wireless connection factors (for example the signal strength), the primary computing device may switch between the 3 modems and 6 antennas to achieve the best wireless performance. Moreover, since 3 baseband modems are available, the primary computing device may aggregate and send data over 3 wireless baseband modem simultaneously to achieve increased throughput. Of course, it is also possible that the primary computing device and/or any of the secondary computing devices may have more than one modem and/or more than 2 antennas. The principles and methods disclosed herein relative to the first aspect of the disclosure may be applied to any of these configurations.

Alternatively or additionally, the principles and methods described herein can also be applied to wireless wide area networks (WWANs) (e.g. cellular networks, LTE, 5G, 6G, etc.). For example, instead of using a wireless-to-wireless hotspot, the wired connection that already exists for purposes of the video connection may be utilized to provide better and more reliable bandwidth between devices.

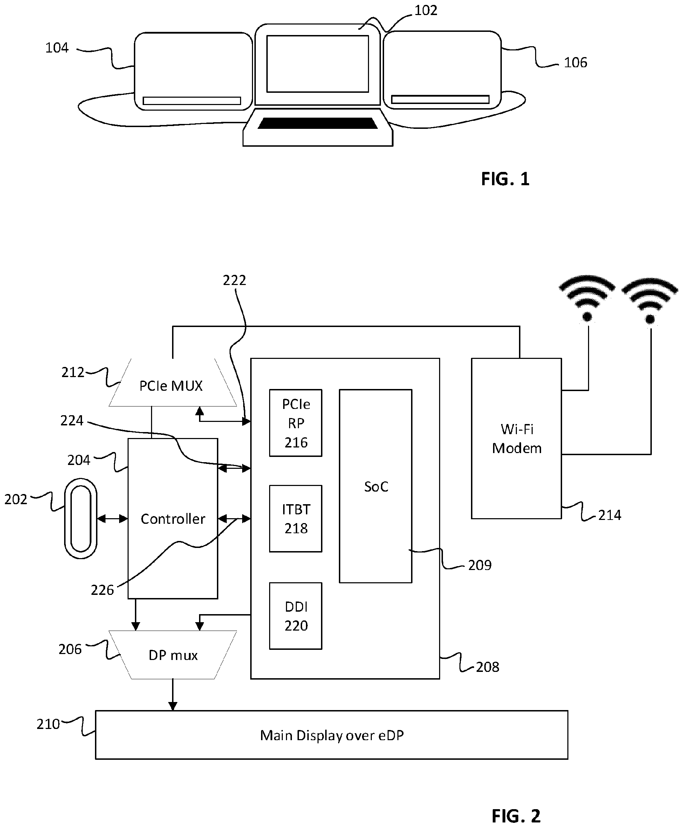

FIG. 1 depicts a primary computing device 102 connected to a first secondary computing device 104 and a second secondary computing device 106. Each of the secondary computing devices, 104 and 106, serve as an additional screen for the primary computing device 102. In this manner, the user operating the primary computing device 102 enjoys approximately 3 times the amount of screen area, thereby resulting in simplification and ease of use.

Such secondary computing devices, for example tablet devices, may function as regular tablet when used as a standalone device. In this mode, they may connect to external accessories via a type-C port. However, the secondary computing devices may alternatively be utilized in extender mode, in which they function as an extended display for a primary computing device. In this mode, the secondary computing devices function essentially as a Thunderbolt sink device. That is, in the extended mode, the secondary computing device functions in a Thunderbolt sink mode, in which the secondary computing device switches its multiplexers to permit the primary computing device to have full control of the secondary computing device's display and radio communication module (e.g. a Wi-Fi module).

FIG. 2 depicts a secondary computing device 104 or 106. The secondary computing device 104 or 106 includes a Thunderbolt interface 202, which feeds to the Thunderbolt controller 204. The Thunderbolt controller 204 outputs to a PCIe multiplexer 212 and/or a display multiplexer 206, and it may communicate bidirectionally with the motherboard 208 via a USB link 222 and/or a Thunderbolt link 226 (e.g. for pass through operation in Thunderbolt host mode).

The display multiplexer 206 switches display inputs between the Thunderbolt controller 204 and the motherboard 208. In the case of a secondary computing device being used as a display for a primary computing device, the display multiplexer 206 may be set to permit the primary computing device to control the display of the secondary computing device 210 via the interface 202, the Thunderbolt controller 204, and the display multiplexer 206.

The secondary processing device further includes a PCTe multiplexer 212, which selects either the Thunderbolt controller 204 or the motherboard 208 as an input for the Wi-Fi Modem 214.

For completeness, the motherboard 208 may include a system on chip 209, which may be configured to perform any of the actions of the secondary computing device in the its normal processing operations (e.g. running applications, receiving and/or sending wireless communications, processing sensor data, etc.). The secondary computing device may further include a PCIe root port 216, an integrated Thunderbolt controller 218, and a digital display interface controller 220.

The secondary processing device may be operated in standalone mode or extended mode. In standalone mode, the display multiplexer 206 and the PCIe multiplexer 212 are set to allow the secondary computing device (e.g. the SoC 209) to have full control of display 210 and the Wi-Fi modem 214. In extended mode, the secondary processing device will enter a Thunderbolt Downstream Facing Port (DFP)/Sink mode. In this mode, the secondary computing device will switch the display multiplexer 206 and the PCIe multiplexer 212 to permit the primary computing device to have full control of the display 210 and the Wi-Fi modem 214.

Even in the extended mode, the SoC 209 may continue to be active. This permits the SoC 209, *inter alia,* to obtain Specific Absorption Rate (SAR) information related to its antennas, such as via an integrated sensor hub (ISH) or an inter-integrated circuit (I2C) and then share these data with the primary computing device, e.g. over the USB link 224.

Alternatively, this configuration described above may be modified such that the PCIe endpoint and the display IN port are supported in the SoC 209. This results in fewer parts compared to the configuration described immediately above.

Alternatively or additionally, and although FIG. 2 is depicted with a PCIe multiplexer 212, the secondary computing device may be implemented with a USB3 connection to the Wi-Fi modem. In this manner, the USB multiplexer (in addition to the PCIe multiplexer 212 and not depicted in FIG. 2, or alternatively understood as a replacement for the PCIe multiplexer 212) permits the primary computing device to control the Wi-Fi modem 214 of the secondary computing device. This may require the addition of USB to the PCIe controller.

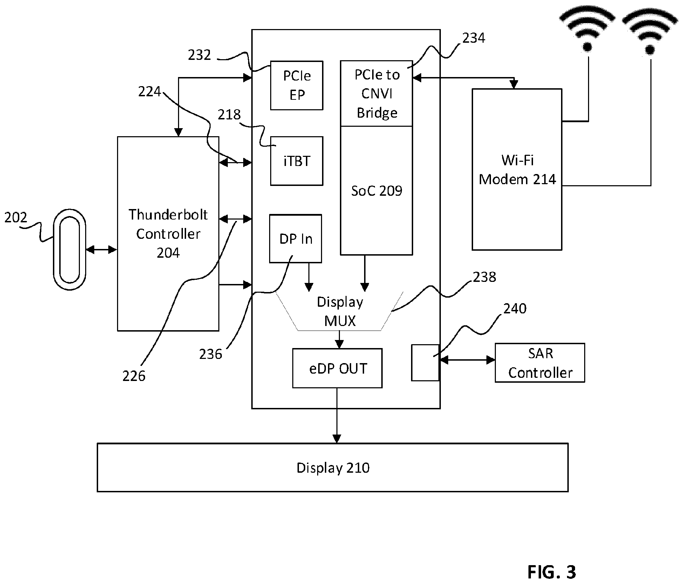

FIG. 3 depicts an alternative configuration of the secondary computing device. Many of the elements are identical to those of FIG. 2 and will therefore not be repeated at this time. In this configuration, however, the motherboard includes a PCIe end point (EP) 232, which is connected with the Thunderbolt controller 204. The motherboard/SoC 209 further includes a PCIe to CNVI bridge 234, which linked to the Wi-Fi modem 214. The motherboard includes a display in port 236, which can receive data directly from the Thunderbolt controller 214, either through the USB link 224 or the Thunderbolt link 226. This optional configuration eliminates the need for an additional PCIe MUX on the motherboard. Further stating, the display IN port, together with the internal multiplexer, will allow access to the main tablet display without the need for an external display multiplexer.

It is expressly noted that the above ideas may be extended for use with a WWAN. In this configuration, the secondary computing device may include a baseband modem, configured to send and receive signals according to a cellular radio technology (e.g. 3G, 4G, LTE, 5G, 6G, etc.). The WWAN baseband modem may be connected as with the Wi-Fi modem of FIG. 1 or the Wi-Fi modem of FIG 2. Should a WWAN modem be present, the WWAN modem may be in place of, or in addition to, the Wi-Fi modem.

Once the primary computing device is connected to the one or more secondary computing devices, the one or more secondary computing devices will switch or be switched to extended mode. In this manner, the primary computing device will control the display of the one or more secondary computing devices.

Each of the one or more secondary computing devices will measure an antenna performance value for each antenna. An antenna performance value may be or include SAR, RSSI, or Wi-Fi signal quality information. Each secondary computing device will send the antenna performance value(s) to the primary computing device. This sending may be achieved, for example, over PCIe and/or USB.

In a hypothetical example in which the primary computing device is connected to a first secondary computing device and a second secondary computing device, and wherein each of the primary computing device and the secondary computing devices have 2 antennas, the primary computing device has 6 antennas at its disposal (2 antennas from the primary computing device, two antennas from the first secondary computing device, and two antennas from the second secondary computing device). Furthermore the primary computing device has 3 modems at its disposal (one modem from the primary computing device and one modem from each of the 2 secondary computing devices).

Using the above configurations, the primary computing device can switch between its own modem or a modem of either of the secondary computing devices. Similarly, the primary computing device can switch between either or both of its own antennas and either or both of the antennas of either or both of the secondary computing devices. The primary computing device may select a modem and/or one or more antennas based on, for example, a quality of service (QoS).

The primary computing device may select any of a modem, an antenna, or a combination of modems and/or antennas using the following steps. The primary computing device may determine antenna performance values for its own antennas. The primary computing device may receive antenna performance values corresponding to each antenna of each secondary computing device to which it is connected. The primary computing device may select an antenna offering the best quality of service. This selection may be an antenna corresponding to the lowest SAR, the highest RSSI, the lowest interference, or any other comparable measure. Upon selecting an antenna, the primary computing device will control the modem to which the selected antenna is connected to send or receive wireless transmissions via the selected antenna.

Illustratively, if the primary computing device is connected to a first secondary computing device and a second secondary computing device, and wherein each of these devices has a Wi-Fi modem and two connected antennas, the primary computing device may determine an antenna performance value for each of its 2 antennas and receive antenna performance values for each of the 2 antennas of each of the first secondary computing device and the second secondary computing device. In this hypothetical example, each of the primary computing device's 2 antennas indicates a high SAR, e.g. due to the hand placement of the user. The first antenna of the first secondary computing device and the second antenna of the second secondary computing device each have a low RSSI. This leaves the second antenna of the first secondary computing device and the first antenna of the second secondary computing device as having acceptable measurements. Of these, the second antenna of the first secondary computing device evidences a higher RSSI. The primary computing device controls the modem of the first secondary computing device to send a wireless signal over the second antenna.

This selection process may be performed at any desired interval or following any desired trigger. For example, the primary computing device may perform the selection process at a regular interval e.g. every 10 seconds, every minute, every 10 minutes, etc. Alternatively or additionally, the primary computing device may perform this selection process upon a reduction of its own wireless communication performance. In this configuration, and for whatever antenna the primary computing device is currently using, when the SAR for that antenna increases such that it is outside of an acceptable range, or when the RSSI of that antenna decreases such that it is outside of an acceptable range, the primary computing device may perform the selection procedure. Alternatively or additionally, the primary computing device may perform the selection procedure upon receiving any new antenna performance value from its own circuitry or from any of the one or more secondary computing devices.

In an additional configuration, which may be combined with any of the above configurations or may be executed in isolation, the primary computing device may aggregate its Wi-Fi resources with those of any of the one or more secondary computing devices. In this manner, the primary computing device may split its data such that each portion of its data is sent by an available baseband modem.

Illustratively, if the primary computing device is connected to a first secondary computing device and a second secondary computing device, and therefore the primary computing device has 3 modems at its disposal, the primary computing device may divide its data to be sent into 3 parts and a portion each part 2 one of the available modems. These data may be sent by the modems concurrently or simultaneously, thereby achieving increased throughput. The bandwidth available to each of the devices may thus be aggregated.

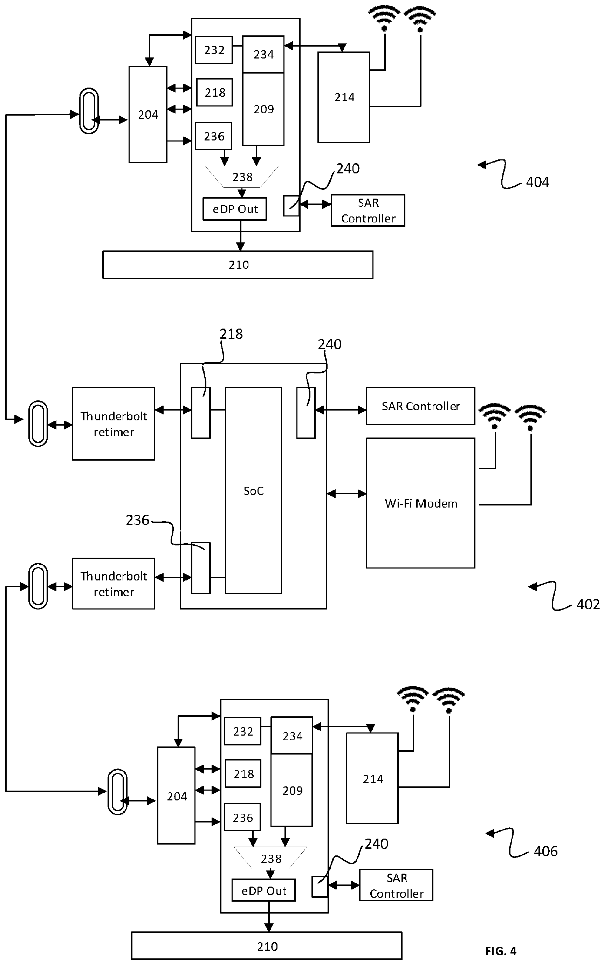

FIG. 4 depicts a system including a primary computing device 402 connected to a first secondary computing device 404 and a second secondary computing device 406. The primary computing device is connected to the secondary computing devices via an interface on the primary computing device and an interface on each of the second computing devices respectively. The connection to the two secondary computing devices is used here illustratively and is not intended to be limiting. Depending on the given configuration, the primary computing device may be connected to a single secondary computing device, to secondary computing devices as shown herein, or to 3 or more secondary computing devices. Using this configuration, the primary computing device may control the screens of the secondary computing devices to which the primary computing devices are connected. Moreover, each secondary computing device may measure one or more antenna performance values, which it may send to the primary computing device via the respective interfaces. Based on this, the primary computing device may select an antenna (e.g. an antenna on the primary computing device, or an antenna on any of the secondary computing devices) for sending or receiving a wireless signal.

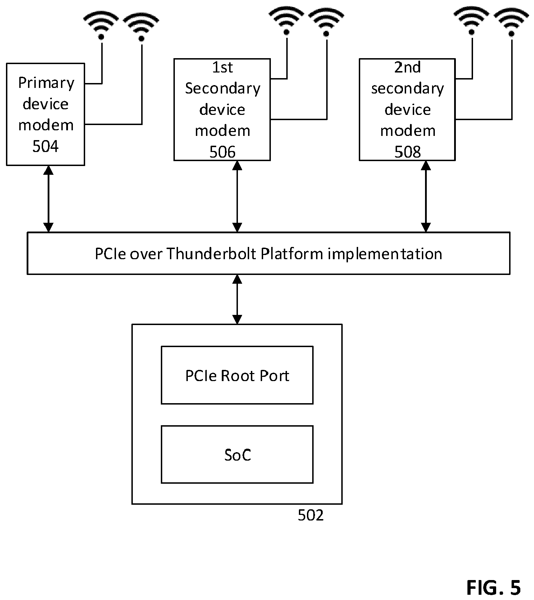

FIG. 5 depicts an implementation of Wi-Fi resource aggregation, according to an aspect of the disclosure. In this figure, the primary computing device 502 controls its own modem 504 a modem of the first secondary device 506, and optionally a modem of the second secondary device 508 to simultaneously or concurrently transmit data, thereby increasing throughput. Conversely, the primary computing device 502 can simultaneously or concurrently receive data from any or all of its own modem 504, the modem of the first secondary computing device 506, or the modem of the second secondary computing device 508.

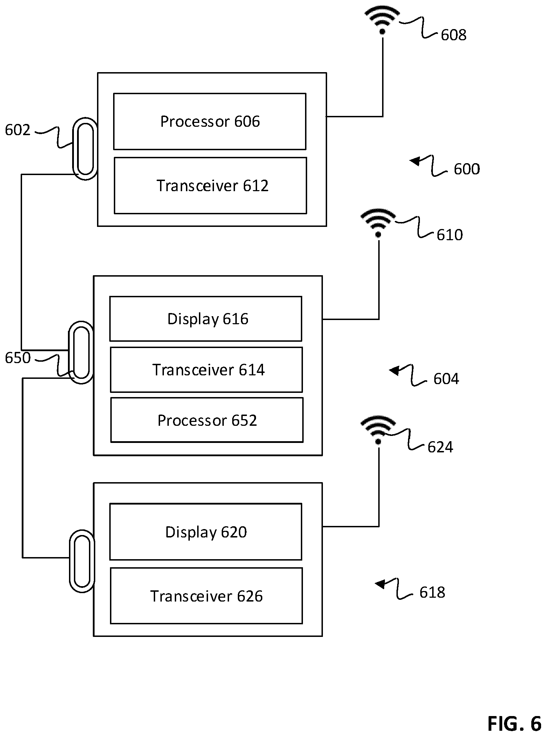

FIG. 6 depicts a primary computing device 600, according to an aspect of the disclosure. The primary computing device may include an interface 602, configured to transfer data between the primary computing 600 device and a secondary computing device 604, external to the primary computing device 600. The primary computing device may include a processor 606, configured to determine a first antenna performance value for a first antenna 608 of the primary computing device; determine a second antenna performance value for a second antenna 610 of the secondary computing device; select the first antenna 608 or the second antenna 610 based on the first antenna performance value and the second antenna performance value; if the processor selects the first antenna 608, control a transceiver 612 of the primary computing device to send a radiofrequency signal over the first antenna 608; and if the processor selects the second antenna 610, control a transceiver 614 of the secondary computing device via the interface 602 to send a radiofrequency signal over the second antenna 610.

The primary computing 600 device may be configured to control a display 616 of the secondary computing device 604 via the interface 602. In this manner, the primary computing device 600 may control the secondary computing device's display 616 and also, depending on the antenna performance values, control the secondary computing device's transceiver 614 to transmit a signal over the secondary computing device's antenna.

In a first optional configuration, any of the first antenna performance value or the second antenna performance value may be or include a specific absorption rate of the first antenna, a signal strength of a first signal received on the first antenna, a signal strength information according to the Institute of Electrical and Electronics Engineers Standard 802.11 (Wi-Fi standard) of a first signal received on the first antenna.

In a second optional configuration, which may be combined with any previous configuration(s), the processor 606 may be configured to determine the first antenna performance value based on at least two of the specific absorption rate of the first antenna, the signal strength of the first antenna, or the signal strength information according to the Institute of Electrical and Electronics Engineers Standard 802.11 (Wi-Fi standard).

In a third optional configuration, which may be combined with any previous configuration(s), the processor may be configured to determine the first antenna performance value based on a weighted average of any of the of the at least two of the specific absorption rate of the first antenna, the signal strength of the first antenna, or the signal strength information according to the Wi-Fi standard.

In a fourth optional configuration, which may be combined with any previous configuration(s), determining the second antenna performance value may include receiving a signal representing the second antenna performance value from the secondary computing device.

In a fifth optional configuration, which may be combined with any previous configuration(s), the primary computing device may be configured to receive the signal representing the second antenna performance value via the interface.

In a sixth optional configuration, which may be combined with any previous configuration(s), the processor of the primary computing device 600 may be further configured to determine a third antenna performance value for a first antenna 608 of the primary computing device 600; determine a fourth antenna performance value for a second antenna 610 of the secondary computing device; select the first antenna 608 or the second antenna 610 based on the third antenna performance value and the fourth antenna performance value; if the processor selects the first antenna, control a transceiver 612 of the primary computing device 600 to send a radiofrequency signal over the first antenna 608; and if that the processor selects the second antenna 610, control a transceiver 614 of the secondary computing device 604 via the interface 602 to send a radiofrequency signal over the second antenna.

In a seventh optional configuration, which may be combined with any previous configuration(s), the secondary computing device 604 may be a first secondary computing device, and wherein the primary computing device 600 is further configured to connect to a second secondary computing device 618 and to control a display 620 of the second secondary computing device via the interface 602; wherein the primary computing device 600 is configured to determine a third antenna performance value for a first antenna 608 of the primary computing device; determine a fourth antenna performance value for a second antenna of the first secondary computing device 610; determine a fifth antenna performance value for a third antenna of the second secondary computing device 624; select the first antenna 608, the second antenna 610, or the third antenna 624 based on the third antenna performance value, the fourth antenna performance value, and the fifth antenna performance value; in the case that the processor 606 selects the first antenna 608, control a transceiver 612 of the primary computing device to send a radiofrequency signal over the first antenna 608; in the case that the processor selects the second antenna 610, control a transceiver 614 of the first secondary computing device 604 via the interface 602 to send a radiofrequency signal over the second antenna 610; and in the case that the processor 606 selects the third antenna 624, control a transceiver 626 of the second secondary computing device 618 via the interface 602 to send a radiofrequency signal over the third antenna 624.

Throughout the description, the interface is referred to herein for convenience as a Thunderbolt interface. The Thunderbolt interface is selected herein because of its high speed and ability to transfer both video data and USB data. The principles and methods of the first aspect of the disclosure are not specifically limited to use of a Thunderbolt interface, and any interface capable of transmitting both video data and data for wireless transmission would be feasible.

In an eighth optional configuration, which may be combined with any previous configuration(s), the interface is further configured to transfer data between the primary computing device and a tertiary computing device, external to the primary computing device; wherein the processor is configured to determine a third antenna performance value for a third antenna of the tertiary computing device; wherein, if the processor selects the second antenna, the processors is further configured to control the transceiver of the tertiary computing device via the interface to send a radiofrequency signal over the third antenna.

A secondary computing device 602 may include an interface 650, configured to transfer data between the secondary computing device 602 and a primary computing device 600, external to the secondary computing device 604; and a processor 652, configured to send to the primary computing device 600 via the interface 650 an antenna performance value for an antenna of the secondary computing device 610; and receive an instruction to permit the primary computing device 600 to control a transceiver 614 of the secondary computing device to send a radiofrequency signal over the antenna. The secondary computing device may include a display and may be configured to permit the primary computing device to control the display via a signal received via the interface.

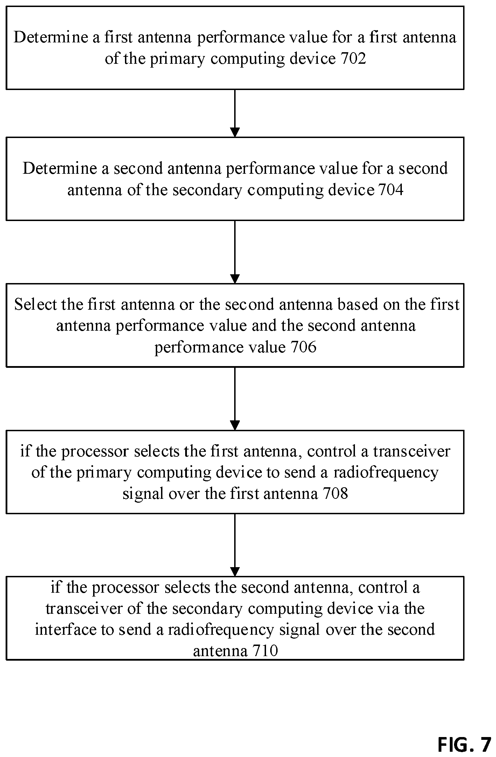

FIG. 7 depicts a method of controlling a secondary processing device including determining a first antenna performance value for a first antenna of the primary computing device 702; determining a second antenna performance value for a second antenna of the secondary computing device 704; selecting the first antenna or the second antenna based on the first antenna performance value and the second antenna performance value 706; if the processor selects the first antenna, control a transceiver of the primary computing device to send a radiofrequency signal over the first antenna 708; and if the processor selects the second antenna, control a transceiver of the secondary computing device via the interface to send a radiofrequency signal over the second antenna 710.

The principles and methods disclosed herein may be applied to situations in which the primary computing device is connected to fewer or more than 2 secondary computing devices. For example, the principles and methods disclosed herein may be applied to situations in which the primary computing device is connected to one, 2, 3, 4, 5, 6, or more secondary computing devices.

### Second Aspect of the Disclosure

Many examples of user equipment (UE) (e.g., smartphones, laptop, etc.) include both cellular and Wi-Fi modems. The transmission power consumption via the cellular air-interface path is almost 20 times greater than that of Wi-Fi. The UE's power expenditure for the cellular network can be reduced by providing a procedure for the UE to communicate with the cellular network over a WLAN (e.g. a Wi-Fi network). This may be achieved with, for example, uplink messages/data (e.g., such as tracking area update/location update etc. in the control plane, or non-latency sensitive data) to the network, and then instead of passing those messages to cellular RF module for transmission via the LTE/NR air-interface, the messages are sent to a message buffer unit to which both the Wi-Fi and Cellular radios have access. The Wi-Fi application entity 'Cellular data Tx' receives the data in the message buffer and transmits them via its Wi-Fi TCP/IP and L2 stack and to the Wi-Fi AP. Once received by the Wi-Fi AP, the messages travel to the Packet Data network (PDN), and from there the data packets go to the Cloud server, where the UE data are stored. The cloud server may be maintained by, for example, the cellular operator for its UEs. The data may then be passed to the appropriate Cellular Core Network entity (UPF/AMF).

Regarding this second aspect of the disclosure, a distinction is made between cellular data/cellular networks and Wi-Fi data/Wi-Fi networks. These terms are used illustratively for convenience but are not intended to be limiting. Specifically, the principles and methods disclosed herein with respect to Wi-Fi data/Wi-Fi networks may be applied to any WLAN or packet data network.

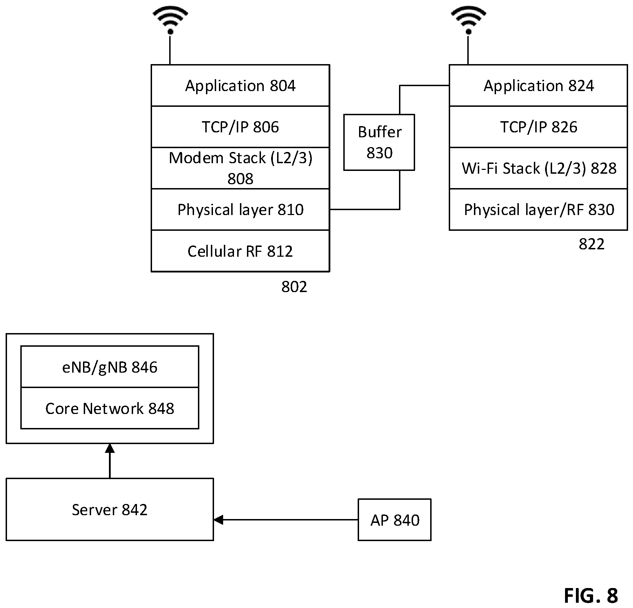

FIG. 8 depicts a message flow and block diagram for transmitting a cellular message via Wi-Fi, WLAN or other packet data network.

A user device may include a cellular modem 802 and a Wi-Fi modem 822. The cellular modem 802 may include an application stack 804, a TCP/IP stack 806, a modem stack 808, a physical layer stack 810, and a cellular radiofrequency stack 812. The Wi-Fi modem 822 may include an application stack 824, a TCP/IP stack 826, a Wi-Fi stack 828, and a physical layer stack 830. The cellular modem 802 generally generates control messages in the protocol layer (layer 3, part of 808), whereas user data messages come from the application layer 804. A user data message is passed through the TCP/IP layer 806, where the IP header is added to the packets for the destination/source addresses. The message is then passed through the L2/3 layer 808 and finally processed in the physical layer 810 and transmitted through the cellular RF 812 to the eNB/gNB via LTE/NR air interface.

In a Wi-Fi network (packet-based network), the user data typically comes from the application layer 824 and is passed through the TCP/IP 826 and L2/3 828, then processed in the physical layer 830 is finally sent via the RF 830 to the wireless AP.

The UE can realize power savings for cellular transmissions by performing the following steps. First, a cellular message from UE modem is identified for transmission over the Wi-Fi network. Although nearly any cellular message could theoretically be transmitted to the cellular network via the Wi-Fi network as described herein, certain messages may be more preferable than others. For example, it may be preferred to select latency tolerant messages for transmission to the cellular network via the Wi-Fi network. Other candidate types of cellular messages for transmission on the Wi-Fi network include, but are not limited to, data messages from the UE such as control plane data generated by the UE modem stack (L2/L3) or user message data comes from the application layer. Selecting a preferred message based on any of these factors is referred to herein as selected a message based on a data selection criterion.

The identified cellular messages for transmission with the Wi-Fi network are sent to the Wi-Fi system. A given UE (e.g., a smartphone, laptop, etc.) may include both a cellular modem and a Wi-Fi modem, so it is very easy to transfer the message from one system to other via a common memory. The UE may include common buffer (msg buffer) 830, which may be accessible to both the cellular and the Wi-Fi systems. When a message comes from the Protocol stack's L2 layer (Datalink) 808 to the physical layer, the cellular physical layer may copy the message to the buffer 830 instead of processing the message at the cellular physical layer 810 and passing it to the cellular RF 812. In the case of user data, such data can be sent directly from the application layer 804 to the Wi-Fi system's TCP/IP layer 826 via the common buffer 830. This avoids the need to process in the cellular stack and therefore results in a faster transmission.

The application layer 824 of the Wi-Fi modem 822 collects the data stored in the message buffer 830 and transmits these data via the Wi-Fi system (e.g. packet data network). An application may remove the message buffer (data) from the message buffer 830 and treat the buffer data as if it is the data buffer, which needs to be passed to a specific server location. The Wi-Fi modem may pass the buffer data via the TCP/IP layer 826 of its own stack. In that layer, the modem may add an appropriate IP destination header (e.g., an IP header corresponding to a server for the cellular network). This destination information may generally be known to the UE, such as by virtue of the fact that the UE also wirelessly connects to the cellular network and can obtain this information directly from the cellular network. The Wi-Fi modem sends the appended data packet to the Wi-Fi L2/3 layer 828 and then via the physical and RF layer 830 of the Wi-Fi modem, where it will be sent to the Wi-Fi wireless AP 840.

The destination server address may be known to the user device by virtue of the Cellular Operator's pre-configured message, in which, for each UE, the operator can provide a specific location for buffer storing or message storing in the cloud server location.

The Wi-Fi AP 840 is agnostic to the origin of the data within the cellular modem, and therefore once the Wi-Fi AP 840 receives the message, it treats the message as a data packet and passes the message to the appropriate destination address via the PDN. The cellular operator may allocate space a server 842 (e.g. a cloud server) for the user uplink data storing. The transmitted message (e.g., the cellular message transmitted over Wi-Fi and the PDN) will be sent to the server 842 via PDN backbone. Once the message is received in the server 842, the message is then passed from the server 842 to the Cellular Core Network (UPF/AMF/PGW/SGW) 848.

The process as described above takes the place of the conventional process in which a message is wirelessly sent from the cellular modem 802, to the eNB/gNB 846, and then subsequently passed to the code network 848. In this manner, cellular data can be passed to the cellular network via a Wi-Fi transmission, thereby requiring a significantly reduced power expenditure.

As described above, this transfer of data from the cellular modem to the Wi-Fi modem occurs at a common buffer (e.g. a common memory). The cellular modem selectively passes user data packets (e.g. such as from the Application layer) to the common buffer. The Wi-Fi application collects that buffer data and passes them to the TCP/IP layer. Once sent to the TCP/IP layer, the transmission occurs between the TCP/IP layer and the AP occurs as with any other Wi-Fi packet, and no additional modifications are necessary. Naturally, the data package must be appended with a header, including a destination address. This destination address is known to the Wi-Fi modem and/or the user device, at least by virtue of the wireless connection between the device and the cellular network. This destination address (e.g. IP address) may be static or dynamic.

Once the message is transmitted to the wireless AP, the AP sends the message via the package data network to the server, which corresponds to the destination address in the package header. The server, being operated by the cellular network, or at least being configured to coordinate with the cellular network, sends the data to the cellular network, where it reaches the network core.

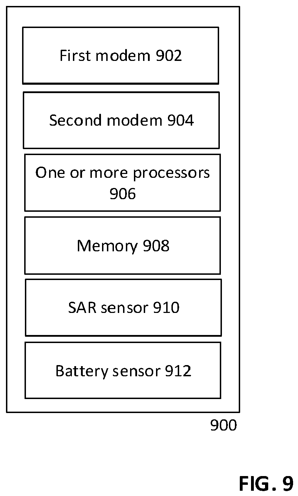

FIG. 9 depicts a user device 900 according to the second aspect of the disclosure. The user device 900 includes a first baseband modem 902, configured to generate a signal for transmission in a cellular network according to a first radio communication protocol. The user device 900 includes a second baseband modem 904, configured to generate a signal for transmission in a local area network according to a second radio communication protocol, different from the first radio communication protocol. The user device includes one or more processors 906. If the wireless connection between the user device and the access point for the local area network on the second radio communication protocol satisfies the signal criterion, the one or more processors 906 are configured to select data from a processing stack of the first baseband modem according to a data selection criterion and store the selected data in a memory. The second baseband modem 904 is configured to read the selected data from the memory and generate a signal for transmission of the selected data according to the second radio communication protocol. The user device may further include a memory 908, accessible to each of the first baseband modem and the second baseband modem. The user device 900 may be configured to store data for transmission on a cellular network (e.g. data for transmission by the first baseband modem 902) on the memory 908. The second baseband modem 904 may be configured to read the data on the memory 908 and to transmit the data over a wireless local area network.

As indicated above, the first radio communication protocol as described in accordance with the second aspect of this disclosure may refer to a cellular radio communication protocol. This may be, but is not limited to, a Long Term Evolution (LTE) radio communication protocol, a 4G radio communication protocol, a 5G radio communication protocol, a 6G radio communication protocol, or otherwise.

The second radio communication protocol as described in accordance with the second aspect of this disclosure may be, but is not limited to, a wireless local area network radio communication protocol. This may include, but is not limited to, a radio communication protocol according to the Wi-Fi Alliance (Wi-Fi). This may be a radio communication protocol according to the Institute of Electrical and Electronics Engineers Standard 802.11.

The one or more processors selecting the data according to the data selection criterion may include the one or more processors selecting data generated by layer two (L2) or layer three (L3) of a processing stack of the first baseband modem. That is, the L2/L3 data may include data related to the connection between the user device and the cellular network. In this manner, the data selection criterion may be or include the selection of L2/L3 data. These data may be somewhat latency tolerant, which may permit them to the transmitted to the cellular network using the principles and methods disclosed herein, which may add a small amount of additional latency during the transmission over the PDN to the server and network core, as compared to a transmission directly to the network base station.

Alternatively or additionally, the one or more processors selecting the data according to the data selection criterion may include the one or more processors selecting data generated by an application layer of a processing stack of the first baseband modem. In this manner, the data selection criterion may be or include the selection of application layer data.

The user device 900 may further include a specific absorption rate sensor 910, which may be configured to detect a human body part within close proximity to a radiofrequency antenna. In this manner, the one or more processors selecting the data according to the data selection criterion may include the one or more processors selecting data when a sensor value of the specific absorption rate sensor is outside of a predetermined range. That is, the data selection criterion may be selecting data when the SAR sensor values are outside of the range. The user device may be configured to switch from a cellular transmission to a wireless LAN transmission whenever the SAR sensor detects the presence of a human body part within close proximity to the wireless antenna. In this manner, the user device 900 may continue to transmit with a lower transmit power (as stated above, the wireless LAN requires a significantly lower transmit power than the cellular network) when a human body part is detected in close proximity to the antenna, thereby continuing communication while maintaining SAR compliance. The SAR sensor values may be compared to a range (e.g. a predetermined range, a dynamic range, etc.). When the SAR sensor value is within the predetermined range, the user device may be configured to continue to transmit over the cellular network (or at least the user device will not switch to the wireless LAN based on the SAR sensor), and when the SAR sensor values are outside of the range, the user device may be configured to switch to transmission over the wireless LAN, where possible, using the principles and methods disclosed herein as part of the second aspect of the disclosure.

The data selection criterion may be or include the selection of latency tolerant data. In this manner, the one or more processors selecting the data for transmission on the wireless LAN may include the one or more processors selecting data that satisfy a latency tolerance requirement. This may be advantageous since the transmission to the cellular network over the wireless LAN and then the PDN to the server may be expected to add additional latency as compared to a wireless transmission to the cellular base station.

The user device may further include a battery sensor 912. The battery sensor may be configured to determine an available battery resource of a battery of the user device. In this manner, the one or more processors selecting the data according to the data selection criterion may include the one or more processors selecting data when a battery resource value is outside of a predetermined range. This permits the user device to switch packets intended for transmission using the more power-resource demanding cellular network along the less power-resource demanding wireless LAN network instead.

Alternatively or additionally, the signal criterion may be a signal strength of a wireless signal between the user device and the access point of the wireless local area network. In this manner, the user device may be configured to switch the transmission of some or all packets intended for the cellular network to the WLAN when a signal strength from the cellular network is too low. Such a low signal strength may result from traveling to an edge of the cellular network, obstacles blocking the cellular network signals, poor channel conditions, wireless interference, or otherwise. In any of these conditions, it may be more reliable and/or preferable to send data to the cellular network using the wireless LAN as disclosed herein. Conversely, the user device may be configured to not send cellular data over the WLAN connection when a signal strength of the WLAN connection is too low.

From the perspective of the core network, a radiofrequency communication network may include a wireless communication node, configured to send radiofrequency signals according to a cellular radio access technology. The radiofrequency communication network may include a server, configured to receive data according to an internet protocol. The radiofrequency communication network may include one or more processors, which may be configured to control the wireless communication node to send a radiofrequency signal representing a data packet including a destination address corresponding to a user device and receive from the server an internet protocol packet from the user device.

Furthermore, this will simplify and ameliorate the certain compromises surrounding SAR precautions. Currently, user devices may include one or more sensors to detect a user body part within close proximity of an antenna and, if a body part is connected, the transmit power of the antenna may be reduced to limit exposure to radiofrequencies. This can have a deleterious effect on cellular performance, as the limited transmit power may impair the device's ability to transmit to the cellular base station. Using the principles and methods disclosed herein in accordance with the second aspect of the disclosure, however, satisfactory uplink to the wireless LAN may be maintained even where cellular uplink would be impaired due to SAR limitations. This is because, as stated above, an uplink transmission to a wireless LAN may require only a fraction (e.g. in some cases, one twentieth) of the power required of a cellular uplink transmission.

Finally, the principles and methods disclosed herein may improve other cellular transmissions by freeing channel resources. That is, the transmissions that are moved from the cellular network to the wireless LAN represent additional, unused channel resources. In this manner, uplink channel resources will be preserved, which is of course beneficial for wireless time-division multiplexing systems (if the uplink channel resource is not used e.g., 5G FR1 TDD, FR2 is all TDD and LTE TDD).

### Third aspect of the disclosure

In the following, and according to the third aspect of the disclosure, certain primary devices can assume or take over network scans of other devices. A UE may have both a cellular modem and a wireless LAN modem (e.g. a Wi-Fi modem, and referred to in the remainder of this disclosure for convenience as a Wi-Fi modem). The UE may perform scans for each of these networks (e.g., cellular and Wi-Fi).

For example, and with respect to Wi-Fi, a Wi-Fi device may perform one or more periodic beacon receive (Rx) operations. For example, the Wi-Fi device may perform any of a passive scan (e.g., performed via beacon Rx) and/or an active scan (e.g., via probe request/response. Depending on whether the user is connected to the AP, a periodic timer may trigger such a scan (e.g., every 10 seconds, every 1 minute, etc.). Turning to the cellular modem, the cellular modem may perform periodic system information block (SIB) acquisition & inter-Radio-access-technology (InterRAT) cell measurements etc. The device may perform periodic measurements to determine the best available cells for data reception. Alternatively or additionally, the device may perform periodic registration to ensure that the modem receives downlink transmissions. The above may be generally referred to herein for convenience as "scans". These scans may be simplified by identifying a primary device to perform the scans on behalf of, or in the stead of, one or more secondary devices.

In identifying a primary device, one factor to be considered may be the device's power source (e.g. whether connected to a mains power source). This primary device may then perform scans for the remaining devices (referred to herein with respect to the third aspect of the disclosure as secondary devices). That is, the primary device may perform master information block (MIB) or SIB scans for one or more secondary devices with a cellular modem. Alternatively or additionally, the primary device may perform one or more beacon reception scans for one or more secondary devices with a Wi-Fi modem. The individual secondary devices can offload these scans to the primary device. Of note, since the primary device would ordinarily perform these scans anyway, there is little change to the routine of the primary device, except for the notification of the scan results to the secondary devices, as will be described herein.

The individual secondary devices may place themselves in an inactive mode (e.g., sleep mode or an extended sleep mode) during the time in which they would have conventionally performed the scans, thereby realizing a power savings. Once the primary device has performed the scans, it can share the scan information to the respective secondary devices via a single message. The duration required for the secondary devices to receive this single message is shorter than the duration required for the secondary devices to perform the individual scans, and therefore there is an overall power savings for each of the secondary devices.

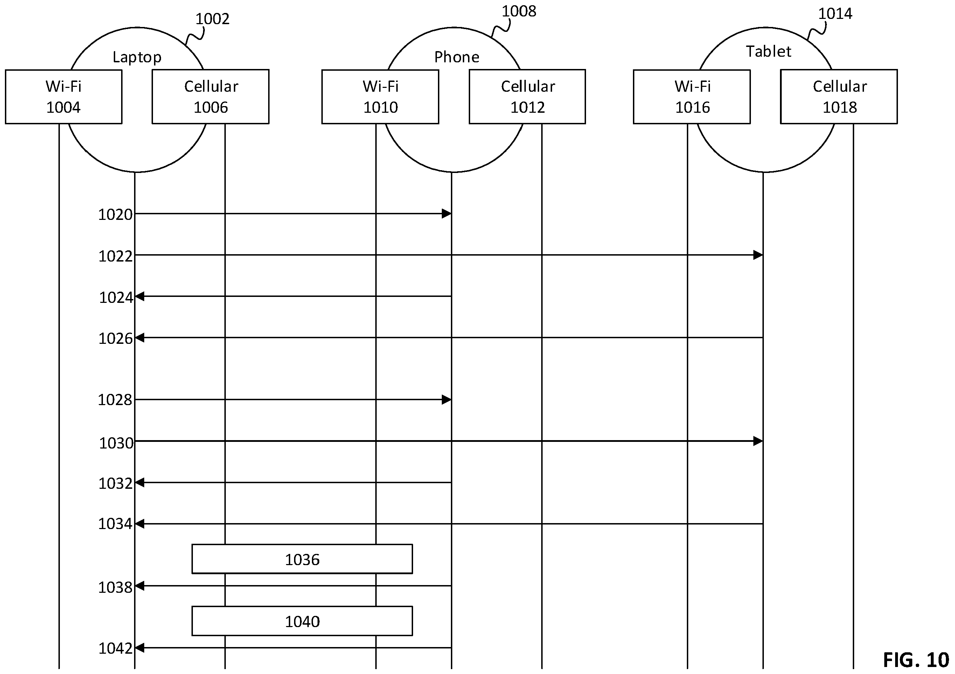

FIG. 10 depicts a communications scheme for a primary device to perform scans for one or more secondary devices, according to the third aspect of the disclosure. In this figure, three devices, a laptop 1002, a smartphone 1008 and a tablet computer 1014 are each present in a common network (e.g. a wireless LAN in a home or office). The laptop 1002 includes both a Wi-Fi modem 1004 and a cellular modem 1006 and is connected to each of a Wi-Fi network and cellular network. The smartphone 1008 includes both a Wi-Fi modem 1010 and a cellular modem 1012 and is connected to each of a Wi-Fi network and cellular network. The tablet computer 1014 includes both a Wi-Fi modem 1016 and a cellular modem 1016 and is connected to each of a Wi-Fi network and cellular network.

A primary device is selected for performance of the scans. Because the selection of the primary device is subject to many variables that may change from installation to installation, this disclosure will not detail the selection of the primary device. Rather, the skilled person can choose the criteria for selection of the primary device that are desired for a given implementation. It is noted, however, that in an optional configuration, the primary device may be selected based on an available power resource, whether in full or in part. In this configuration, the primary device will be a/the device within the wireless LAN that is connected to a mains power supply. As described in detail above, many devices that are typically included in a wireless LAN may principally rely on battery power. Since battery power is a limited resource compared to mains power, and given that battery powered devices must conserve their power to satisfy their internal power budgets, it may be preferable to move the scans to a mains-powered device.

In this hypothetical configuration as depicted in FIG. 10, the laptop computer is connected to a mains power source, whereas the smartphone and the tablet are operated on battery power. As a result, the laptop is selected as the primary device, and the smartphone and the tablet are selected as the secondary devices. The primary device sends a message 1020 to the smartphone 1008 (a first secondary device) and a message 1022 to the tablet computer 1014 (a second secondary device) stating that it is an owner (e.g., a group owner, a primary device). It is noted that the communication between devices may occur with any protocol capable of carrying out the aim of the instant disclosure. In one optional configuration, the communication may be carried out using Wi-Fi Direct technology, which may also be referred to as Wi-Fi P2P, and may be one of the exemplary technologies used with respect to peer-to-peer connections provided in this disclosure. A Wi-Fi Direct connection may allow communication devices to communicate over an established Wi-Fi Direct connection without an intermediary entity such as an access point or a router. Wi-Fi Direct technology allows the formation of a P2P network by forming a P2P group in which a communication device may take a role as a Group Owner (GO) or a Group Client (GC).

Continuing with the example, each of the smartphone 1008 and the tablet computer 1014 sends an acknowledgement, 1024 and 1026 respectively. The laptop 1002 performs the usual scans (e.g. cellular scans and/or Wi-Fi scans). The primary device may send a first message 1028 to the smartphone 1008 with the scan information and a second message 1030 to the tablet computer 1014 with the scan information. Each of the smartphone 1008 and the tablet computer 1014 may acknowledge the scan information, 1032 and 1034 respectively. In this manner, the secondary devices may receive the necessary scan information from the primary device without having to perform the scan themselves.

In some circumstances, it may be necessary or desired for a secondary device to assume performing its own scans. For example, if a secondary device begins performing an operation for which increased transmission with the cellular base station or the wireless AP is necessary, and/or if it begins certain latency intolerant operations, the secondary device may need to assume its own scans. In this manner, a mechanism is presented for the secondary device to assume performance of its own scans. In 1036, the smartphone 1008 begins performing a voice call or begins roaming with its cellular modem 1012. The smartphone 1008 may send a message to the primary device 1012 requesting removal from the cell monitoring 1038. Thereafter, the smartphone 1008 will perform its own scans and will not rely on scans from the primary device 1002. Upon completion of the event for which the smartphone re-assumed its own scans (e.g. upon completion of the voice call, or upon completion of the roaming), it may be beneficial for the smartphone 1008 to again rely on the primary device for the necessary scans. In this manner, the smartphone 1008 may again set its transceiver to be idle during a reception period or during reception periods for the necessary scans 1040 and may send a message 1042 to the primary device requesting again that the primary device perform the necessary scans for the secondary device.

Any of the primary device any the secondary device may perform one or more calibration operations to determine whether the primary device should perform scans for the secondary device or whether it would be preferable for the secondary device to perform its own scans. As stated above, it may be preferred for the secondary device to perform its own scans when being actively used (e.g. when engaged in activities for which more than minimal or baseline exchanges with the respective network are necessary).

Certain events may be understood as proxies for the device's current or future use and therefore may be used set or discontinue scans by the primary device. Examples of such events may include, but are not limited to, a screen of the device transitioning from inactive to active or a determination that the secondary device is mobile (e.g. that the device is changing locations). Such events may cause the secondary device to send a message as in 1038 to the primary device, and the secondary device will re-assume its own scans.

This disclosure will now turn to the communication between devices. In one optional configuration, the devices, which are assumed to be connected via a wireless LAN, may communicate with one another via Wi-Fi's Point to Point Protocol (P2P). P2P permits devices to be organized into groups and for one device with the group to be the group owner. In this configuration, the primary device, upon selection, may declare itself the group owner, which may be understood as a proxy for the primary device. The secondary devices act as P2P devices and listen for transmission from the primary device at predetermined times.

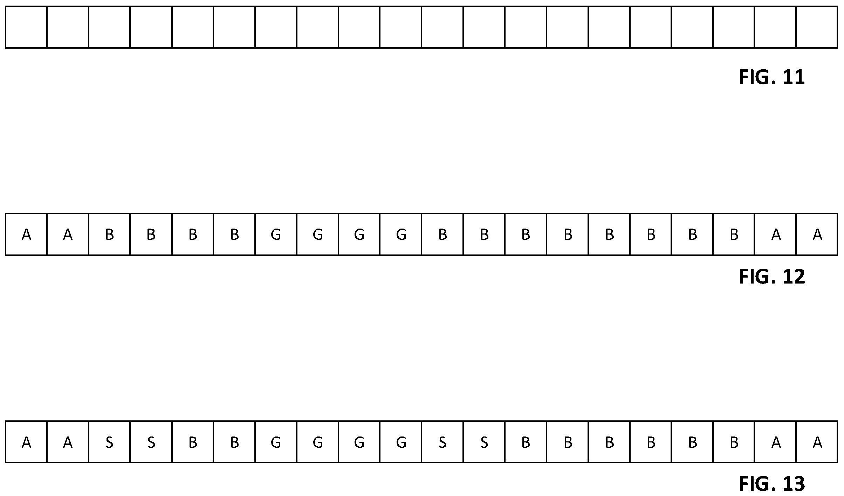

The following describes the durations during which the secondary devices listen and the power savings resulting therefrom. FIG. 11 depicts an exemplary working frame of a Wi-Fi modem. This figure depicts 20 time blocks, each time block representing 50 ms, for a total of one second among the 20 time blocks. Each time block is conventionally dedicated to one or more listening activities or an inactive period. Fig. 12 depicts a conventional attribution of the time blocks to various tasks. In this figure, 'A' represents an auxiliary slot, 'I' represents an Interdependent Basic Service Set (IBSS) transmission, 'B' represents a basic service set (BSS) transmission, 'P' represents a P2P transmission, 'G' represents a Wi-Fi GO transmission, and 'S' represents a P2P secondary device transmission. In a conventional configuration, each device must listen during some or all of the auxiliary slots for the basic scan operations. This in FIG. 12, this equates to 20 msec per second of listening.

FIG. 13 depicts a time map for a secondary device that is relying on primary device scanning. Using principles and methods disclosed herein, the secondary device may enter an inactive (e.g. sleep) mode during many or all of the 'A' symbols, which can amount to 200msec per second of power savings. The secondary devices may use some of the time slots from the BSS's MAC (denoted as 'B' in FIG. 12) for P2P communication to receive the scan messages from the primary device, during which time the scan information obtained from the primary device is sent to the secondary devices. The periods during which the secondary devices are in listening mode to obtain the scan information from the primary device are indicated by 'S'.

In an optional configuration, the 'S' periods may be further reduced. For example, the secondary devices may switch from four listening periods per 1 second to 3 listening periods, to two listening periods, to one listening period, or even to no listening periods. It is noted that reducing the listening periods to zero listening periods results in four 20 msec 'A' listening periods in which the secondary device is in standby mode, and four 20 msec 'S' listening periods during which the secondary device is in standby mode, which equates to eight listening periods or a power savings of approximately 40%.

With respect to the cellular network, the secondary devices may save power by avoiding periodic SIB acquisition at the individual devices and by instead configuring them to share SIB acquisition data via common primary device. For this, it is noted that SIB acquisition information is not device specific, and therefore it may be shared without any detriment to the network configuration. This allows the cellular modem (the L1 / PHY layer) to be put into extended sleep mode during periods in which the secondary device would normally perform SIB acquisition. Regarding MIB, MIB transmissions occur every 40 msec.

The secondary devices may save power by avoiding periodic SIB acquisition at individual devices and instead receive the SIB acquisition data via a primary device. This also allows the secondary devices to put themselves into extended sleep in their L1/PHY layers of their cellular modems. Specifically, with respect to SIB acquisition, there is SIB-1 to SIB-9 with SIB 1 occurring every 80msec. SIB-1 will have the periodicity of remaining SIBs until SIB-9. In certain configurations, each of these may be are placed with a gap of 80msec; this is generally explicitly stated by SIB-1. In light of this, the total time to read all relevant SIBs is approx. 320msec (taking into account the 80msec gaps for each SIB as SIB-1 to SIB-4 are read (the remaining SIBs are optional). This results in 320msec per device per frame, during which the secondary devices may be placed in an inactive mode.

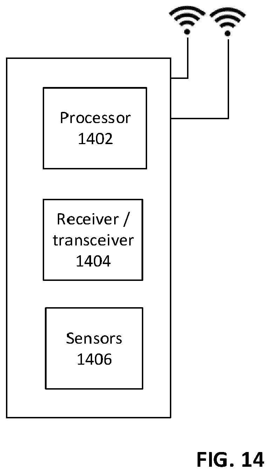

FIG. 14 depicts a secondary device 1400, according to the third aspect of the disclosure. The secondary device 1400 may include one or more processors 1402, configured to wirelessly connect to a base station according to a first radio communication protocol; wirelessly connect to a user device according to a second radio communication protocol; control a receiver 1404 to enter an inactive mode during a first duration according to the first radio communication protocol; control the receiver 1404 to enter an active listening mode during a second duration according to the first radio communication protocol; and receive from the user device during the second duration a radiofrequency signal according to the second radio communication protocol, the radiofrequency signal representing a measurement by the user device of a signal transmitted by the base station during the first duration.

In a first optional configuration, the first radio communication protocol may be a protocol according to Wi-Fi Alliance or a cellular radio access communication protocol. The first duration may correspond to a scheduled beacon transmission from the base station according to the first radio communication protocol.

Alternatively, or in combination with any of the above configurations, and in a second optional configuration, the first duration may correspond to a scheduled MIB transmission from the base station according to the first radio communication protocol. The first duration in this regard may correspond to one or more scheduled SIB transmissions from the base station according to the first radio communication protocol.

Alternatively, or in combination with any of the above configurations, and in a third optional configuration, the first radio communication protocol may be a protocol according to Wi-Fi Alliance or a cellular radio access communication protocol, and the second radio communication protocol may be a peer to peer networking protocol.

Alternatively, or in combination with any of the above configurations, and in a fourth optional configuration, the one or more processors 1402 may be configured to determine whether a distance between the primary device and the secondary device is outside of a range, and if the distance is outside of the range, the one or more processors may be configured to control the receiver to enter an active listening mode during a next first duration according to the first radio communication protocol. In this manner, the secondary device may utilize one or more sensors 1406 (e.g. positioning sensors, image sensors, etc.), which may determine a distance (or proxy factor as an indicia of a distance), to assess whether the scan offloading is warranted (e.g. beneficial) in light of the distance between the devices. This recognizes that large distances between the primary device and the secondary device may render the scans performed by the primary device less useful to the secondary device (e.g. the scans may be somewhat location dependent and larger distances between the devices suggest that the scan performed by a distant primary device has less relevance for the secondary device). Furthermore, the secondary device may be configured to assume performance of its own scans based on a change in location (rather than a threshold distance), as a change in location may indicate that the battery powered device is mobile. Mobility both suggests that the distance to the primary device may increase and also that the mobile device may be actively in use or will soon be actively in use.

Alternatively, or in combination with any of the above configurations, and in a fifth optional configuration, the one or more processors 1402 may be configured to determine whether a relative distance between the primary device and the secondary device increases, and if the relative distance increases, the one or more processors are configured to control the receiver to enter an active listening mode during a next first duration according to the first radio communication protocol. As stated above with respect to the fourth optional configuration, the change in distance suggests a diminished relevance of scans performed by the primary device and/or an increased likelihood of use by the secondary device.

Alternatively, or in combination with any of the above configurations, and in a sixth optional configuration, the one or more processors 1402 may be configured to determine whether the secondary device is engaged in an active voice communication, and if the one or more processors 1402 determine that the secondary device is engaged in an active voice communication, the one or more processors 1402 may be configured to control the receiver 1404 to enter an active listening mode during a next first duration according to the first radio communication protocol. As stated above, this configuration recognizes that an active voice connection may require more accurate and/or more frequent scans than would otherwise be performed under the power saving steps disclosed herein.

Alternatively, or in combination with any of the above configurations, and in a seventh optional configuration, the one or more processors 1402 may be configured to determine whether a current time is within a first range, and any of whether a distance between the primary device and the secondary device is outside of a second range, whether a relative distance between the primary device and the secondary device increases, or whether the secondary device is engaged in an active voice communication; and if the one or more processors 1402 determine that the current time is within the first range and any of the distance between the primary device and the secondary device is outside of the second range, the relative distance between the primary device and the secondary device increases, or the secondary device is engaged in an active voice communication; the one or more processors 1402 may be configured to control the receiver to enter an active listening mode during a next first duration according to the first radio communication protocol. Conversely, if the one or more processors 1402 determine that the current time is outside of the first range, then the one or more processors 1402 may be configured to not control the receiver to enter an active listening mode during a next first duration according to the first radio communication protocol. This may be understood as a "night mode" or an away mode, in which certain times of the day are generally associated with decreased user activity, and thereby with decreased need for the secondary device to perform its own scans. In this manner, if the processors detect a factor that would otherwise cause the one or more processors to control the receiver to resume performing its own scans, the processors may opt not to control the receive to resume its own scans at certain times of day, for example, at night.

In an alternative configuration, the primary device may be configured such that its one or more processors determine whether a current time is within a first range, and if the one or more processors determine that the current time is within the first range, the one or more processors are configured not to control the transmitter to send an instruction to the secondary device to enter an active listening mode during a next first duration according to the first radio communication protocol. In this manner, the primary device will generally continue to perform scans for devices during certain portions of the day, for example at night.

Alternatively, or in combination with any of the above configurations, and in an eighth optional configuration, the one or more processors may be further configured to determine whether a screen of the secondary device is active, and if the screen is active, to control the receiver to enter an active listening mode during a subsequent first duration according to the first radio communication protocol. Here, an active screen is a proxy for a user activity and/or the need for the device to have scan data that is more accurate and/or more frequent than scan data as performed in a power saving mode according to the third aspect of this disclosure.

Turning to the primary device, the primary device may include one or more processors, configured to wirelessly connect to a base station according to a first radio communication protocol; wirelessly connect to a secondary device according to a second radio communication protocol; perform a network scanning operation during a first duration according to the first radio communication protocol; and control a transmitter during to send the secondary device a radiofrequency signal representing a result of the network scanning operation.

Here it is expressly noted that the primary device may not transmit each result of the network scanning operation to the secondary device. In this manner, the primary device may be configured to compare a result of the network scanning operation with a previous result of the network scanning operation. The primary device may be configured to transmit the result of the network scanning operation only if a difference between the result of the network scanning operation and the previous result of the network scanning operation is outside of a range. Otherwise stated, to the extent that the primary device is described as controlling the transmitter to send the secondary device the radiofrequency signal representing the result of the network scanning operation, this may be optionally limited to the scenario that the difference between the result and the previous result is outside of the range. In this manner, the primary device may be configured to not control the transmitter to send the secondary device the radiofrequency signal representing the result of the network scanning operation if the difference is within the range.

As with the secondary device, the first radio communication protocol may optionally be a protocol according to Wi-Fi Alliance or a cellular radio access communication protocol, and the second radio communication protocol may optionally be a P2P networking protocol.

In this manner, the first duration may correspond to a scheduled beacon transmission from the base station according to the first radio communication protocol, a scheduled MIB transmission from the base station according to the first radio communication protocol, one or more scheduled SIB transmissions from the base station according to the first radio communication protocol, or any of these.

The one or more processors of the primary computing device may be configured to determine whether a distance between the primary device and the secondary device is outside of a range, and if the distance is outside of the range, the one or more processors are configured to control the transmitter to send an instruction for the secondary device to perform the scanning operation.

The one or more processors of the primary device may be configured to determine whether a relative distance between the primary device and the secondary device increases, and if the relative distance increases, the one or more processors are configured to control the transmitter to send the secondary device an instruction to enter an active listening mode during a next first duration according to the first radio communication protocol. The one or more processors of the primary device may be configured to determine whether the secondary device is engaged in an active voice communication, and if the one or more processors determine that the secondary device is engaged in an active voice communication, the one or more processors are configured to control the transmitter to send an instruction to the secondary device to enter an active listening mode during a next first duration according to the first radio communication protocol.

The one or more processors of the primary device may be configured to determine whether a current time is within a first range, and any of whether a distance between the primary device and the secondary device is outside of a second range, whether a relative distance between the primary device and the secondary device increases, or whether the primary device is engaged in an active voice communication; and if the one or more processors of the primary device determine that the current time is within the first range and any of the distance between the primary device and the secondary device is outside of the second range, the relative distance between the primary device and the secondary device increases, or the primary device is engaged in an active voice communication; the one or more processors of the primary device may be configured to control the transmitter to send an instruction to the secondary device to enter an active listening mode during a next first duration according to the first radio communication protocol. Conversely, if the one or more processors of the primary device determine that the current time is outside of the range, then the one or more processors of the primary device may be configured not to control the transmitter of the primary device to send an instruction to the secondary device to enter an active listening mode during a next first duration according to the first radio communication protocol. This, again, is a function of the "night mode" as executed on the primary device.

In an optional configuration, the one or more processors of the primary device may be further configured to perform the network scanning operation during a third duration according to the first radio communication protocol; determine whether a difference between a result of the network scanning operation during the first duration and a result of the network scanning operation during the second duration; if the different is outside of a range, control the transmitter to send during the second duration a radiofrequency signal representing a measurement by the primary device of a signal transmitted by the base station during the third duration; and if the different is with the range, send no measurement of the signal transmitted by the base station during the third duration.

The one or more processors may be further configured to repeat the network scanning operation at an interval. The one or more processors may be configured to dynamically adjust the interval based on any of a time of day, a histogram of activities of the secondary device, a similarity of a result of the network scan and a subsequent network scan.

Throughout description of this aspect of the disclosure, the terms user device and/or user equipment have been used. These are intended to be understood synonymously. For the purposes of this aspect of the disclosure, a user device or user equipment may be any device that is configured to wirelessly send data over each of a cellular network and a wireless local area network. These may include, but are not limited to, cellphones, smartphones, smartwatches, tablet computers, and laptops.

The principles and methods disclosed herein with regard to the second aspect of the disclosure will reduce transmit power needed for certain uplink transmissions, which can now be transmitted over the local area network rather than over the cellular network.

Additional aspects of the disclosure will be described by way of example:
In Example 1, a primary computing device including an interface, configured to transfer data between the primary computing device and a secondary computing device, external to the primary computing device; and a processor, configured to: determine a first antenna performance value for a first antenna of the primary computing device; determine a second antenna performance value for a second antenna of the secondary computing device; select the first antenna or the second antenna based on the first antenna performance value and the second antenna performance value; if the processor selects the first antenna, control a transceiver of the primary computing device to send a radiofrequency signal over the first antenna; and if the processor selects the second antenna, control a transceiver of the secondary computing device via the interface to send a radiofrequency signal over the second antenna.
In Example 2, the primary computing device of Example 1, wherein the primary computing device is further configured to control a display of the secondary computing device via the interface.
In Example 3, the primary computing device of Example 1 or 2, wherein the first antenna performance value includes a specific absorption rate of the first antenna, or wherein the processor is configured to determine the first antenna performance value based on the specific absorption rate of the first antenna.
In Example 4, the primary computing device of any one of Examples 1 to 3, wherein the first antenna performance value includes a signal strength of a first signal received on the first antenna, or wherein the processor is configured to determine the first antenna performance value based on the signal strength of the first signal received on the first antenna.
In Example 5, the primary computing device of any one of Examples 1 to 4, wherein the first antenna performance value includes signal strength information according to the Institute of Electrical and Electronics Engineers Standard 802.11 (Wi-Fi standard) of a first signal received on the first antenna, or wherein the processor is configured to determine the first antenna performance value based on the signal strength information according to the Wi-Fi standard.
In Example 6, the primary computing device of any one of Examples 1 to 5, wherein the second antenna performance value includes a specific absorption rate of the second antenna, or wherein the processor is configured to determine the second antenna performance value based on the specific absorption rate of the first antenna.
In Example 7, the primary computing device of any one of Examples 1 to 6, wherein the second antenna performance value includes a signal strength of a second signal received on the second antenna or wherein the processor is configured to determine the second antenna performance value based on the signal strength of the second signal received on the second antenna.
In Example 8, the primary computing device of any one of Examples 1 to 7, wherein the second antenna performance value includes signal strength information according to the Institute of Electrical and Electronics Engineers Standard 802.11 (Wi-Fi standard) of a second signal received on the second antenna or wherein the processor is configured to determine the second antenna performance value based on the signal strength information according to the Wi-Fi standard.
In Example 9, the primary computing device of any one of Examples 1 to 8, wherein the processor is configured to determine the first antenna performance value based on at least two of the specific absorption rate of the first antenna, the signal strength of the first antenna, or the signal strength information according to the Institute of Electrical and Electronics Engineers Standard 802.11 (Wi-Fi standard).
In Example 10, the primary computing device of Example 9, wherein the processor is configured to determine the first antenna performance value based on a weighted average the of the at least two of the specific absorption rate of the first antenna, the signal strength of the first antenna, or the signal strength information according to the Wi-Fi standard.
In Example 11, the primary computing device of any one of Examples 1 to 9, wherein determining the second antenna performance value includes receiving a signal representing the second antenna performance value from the secondary computing device.
In Example 12, the primary computing device of Example 10, wherein the primary computing device is configured to receive the signal representing the second antenna performance value via the interface.
In Example 13, the primary computing device of any one of Examples 1 to 12, wherein the processor is further configured to: determine a third antenna performance value for a first antenna of the primary computing device; determine a fourth antenna performance value for a second antenna of the secondary computing device; select the first antenna or the second antenna based on the third antenna performance value and the fourth antenna performance value; if the processor selects the first antenna, control a transceiver of the primary computing device to send a radiofrequency signal over the first antenna; and if that the processor selects the second antenna, control a transceiver of the secondary computing device via the interface to send a radiofrequency signal over the second antenna.
In Example 14, the primary computing device of any one of Examples 1 to 12, wherein the secondary computing device is a first secondary computing device, and wherein the primary computing device is further configured to connect to a second secondary computing device and to control a display of the second secondary computing device via the interface; wherein the primary computing device is configured to: determine a third antenna performance value for a first antenna of the primary computing device; determine a fourth antenna performance value for a second antenna of the first secondary computing device; determine a fifth antenna performance value for a third antenna of the second secondary computing device; select the first antenna, the second antenna, or the third antenna based on the third antenna performance value, the fourth antenna performance value, and the fifth antenna performance value; in the case that the processor selects the first antenna, control a transceiver of the primary computing device to send a radiofrequency signal over the first antenna; in the case that the processor selects the second antenna, control a transceiver of the first secondary computing device via the interface to send a radiofrequency signal over the second antenna; and in the case that the processor selects the third antenna, control a transceiver of the second secondary computing device via the interface to send a radiofrequency signal over the third antenna.
In Example 15, the primary computing device of any one of Examples 1 to 13, wherein the interface is configured as a Thunderbolt interface.
In Example 16, the primary computing device of any one of Examples 1 to 14, wherein the interface is further configured to transfer data between the primary computing device and a tertiary computing device, external to the primary computing device; wherein the processor is configured to determine a third antenna performance value for a third antenna of the tertiary computing device; wherein, if the processor selects the second antenna, the processors is further configured to control the transceiver of the tertiary computing device via the interface to send a radiofrequency signal over the third antenna.
In Example 16a, a primary computing device comprising an interface, configured to transfer data between the primary computing device and a secondary computing device, external to the primary computing device; and a processor, configured to control a transceiver of the primary computing device to send a first radiofrequency signal over the first antenna; and control a transceiver of the secondary computing device via the interface to send a second radiofrequency signal over the second antenna.
In Example 16b, the primary computing device of Example 16a, wherein the processors controls the transceiver of the primary computing device to send the first radiofrequency signal over the first antenna simultaneously or concurrently with the one or more processors controlling the transceiver of the secondary computing device via the interface to send the second radiofrequency signal over the second antenna.
In Example 16c, the device of Example 16a or 16b configured as a non-transitory computer readable medium.
In Example 17, a secondary computing device including: an interface, configured to transfer data between the secondary computing device and a primary computing device, external to the secondary computing device; and a processor, configured to: send to the primary computing device via the interface an antenna performance value for an antenna of the secondary computing device; and receive an instruction to permit the primary computing device to control a transceiver of the secondary computing device to send a radiofrequency signal over the antenna.
In Example 18, the secondary computing device of Example 17, wherein the secondary computing device includes a display, and wherein the secondary computing device is configured to permit the primary computing device to control the display via a signal received via the interface.
In Example 19, the secondary computing device of Example 17 or 18, wherein the antenna performance value includes a specific absorption rate of the antenna.
In Example 20, the secondary computing device of any one of Examples 17 to 19, wherein the antenna performance value includes a signal strength of a signal received on the antenna.
In Example 21, the secondary computing device of any one of Examples 17 to 20, wherein the antenna performance value includes signal strength information according to the Institute of Electrical and Electronics Engineers Standard 802.11 (Wi-Fi standard) of a signal received on the antenna.
In Example 22, the secondary computing device of any one of Examples 17 to 21, wherein the antenna performance value is a weighted value based on at least two of a specific absorption rate of the antenna, a signal strength of a signal received on the antenna, or a signal strength information according to the Institute of Electrical and Electronics Engineers Standard 802.11 (Wi-Fi standard) of a signal received on the antenna.
In Example 23, the secondary computing device of Example 17 or 22, wherein the antenna is a first antenna and the antenna performance value is a first antenna performance value, and wherein the secondary computing device is further configured to send to the primary computing device via the interface a second antenna performance value for a second antenna of the secondary computing device; and wherein the instruction is an instruction to permit the primary computing device to control a transceiver of the secondary computing device to send a radiofrequency signal over the first antenna or the second antenna.
In Example 24, the secondary computing device of Example 23, wherein the secondary computing device is configured to transmit a signal according to the Institute of Electrical and Electronics Engineers Standard 802.11 (Wi-Fi standard) over each of the first antenna and the second antenna.
In Example 25, the secondary computing device of Example 23, wherein the secondary computing device is configured to transmit a signal according to the Institute of Electrical and Electronics Engineers Standard 802.11 (Wi-Fi standard) over the first antenna and a signal according to a cellular radio access technology over the second antenna.
In Example 26, the secondary computing device of any one of Examples 17 to 25, wherein the secondary computing device further includes a multiplexer, configured to selectively connect the interface to the transceiver, and wherein the secondary computing device is configured to control the multiplexer to connect the interface to the transceiver based on the instruction.
In Example 27, a non-transitory computer readable medium, including instructions which, if executed, cause one or more processors to: determine a first antenna performance value for a first antenna of the primary computing device; determine a second antenna performance value for a second antenna of the secondary computing device; select the first antenna or the second antenna based on the first antenna performance value and the second antenna performance value; if the processor selects the first antenna, control a transceiver of the primary computing device to send a radiofrequency signal over the first antenna; and if the processor selects the second antenna, control a transceiver of the secondary computing device via an interface connecting the primary computing device and the secondary computing device to send a radiofrequency signal over the second antenna.
In Example 28, the computer readable medium of Example 27, wherein the instructions are further configured to cause the one or more processors to control a display of the secondary computing device via the interface.
In Example 29, the computer readable medium of Example 27 or 28, wherein the first antenna performance value includes a specific absorption rate of the first antenna, or wherein the wherein the instructions are further configured to cause the one or more processors to determine the first antenna performance value based on the specific absorption rate of the first antenna.
In Example 30, the computer readable medium of any one of Examples 27 to 29, wherein the first antenna performance value includes a signal strength of a first signal received on the first antenna, or wherein the instructions are further configured to cause the one or more processors to determine the first antenna performance value based on the signal strength of the first signal received on the first antenna.
In Example 31, the computer readable medium of any one of Examples 27 to 30, wherein the first antenna performance value includes signal strength information according to the Institute of Electrical and Electronics Engineers Standard 802.11 (Wi-Fi standard) of a first signal received on the first antenna, or wherein the instructions are further configured to cause the one or more processors to determine the first antenna performance value based on the signal strength information according to the Wi-Fi standard.
In Example 32, the computer readable medium of any one of Examples 27 to 31, wherein the second antenna performance value includes a specific absorption rate of the second antenna, or wherein the instructions are further configured to cause the one or more processors to determine the second antenna performance value based on the specific absorption rate of the first antenna.
In Example 33, the computer readable medium of any one of Examples 27 to 32, wherein the second antenna performance value includes a signal strength of a second signal received on the second antenna or wherein the instructions are further configured to cause the one or more processors to determine the second antenna performance value based on the signal strength of the second signal received on the second antenna.
In Example 34, the computer readable medium of any one of Examples 27 to 33, wherein the second antenna performance value includes signal strength information according to the Institute of Electrical and Electronics Engineers Standard 802.11 (Wi-Fi standard) of a second signal received on the second antenna or wherein the instructions are further configured to cause the one or more processors to determine the second antenna performance value based on the signal strength information according to the Wi-Fi standard.
In Example 35, the computer readable medium of any one of Examples 27 to 34, wherein the instructions are further configured to cause the one or more processors to determine the first antenna performance value based on at least two of the specific absorption rate of the first antenna, the signal strength of the first antenna, or the signal strength information according to the Institute of Electrical and Electronics Engineers Standard 802.11 (Wi-Fi standard).
In Example 36, the computer readable medium of Example 35, wherein the instructions are further configured to cause the one or more processors to determine the first antenna performance value based on a weighted average the of the at least two of the specific absorption rate of the first antenna, the signal strength of the first antenna, or the signal strength information according to the Wi-Fi standard.
In Example 37, the computer readable medium of any one of Examples 27 to 35, wherein determining the second antenna performance value includes receiving a signal representing the second antenna performance value from the secondary computing device.
In Example 38, the computer readable medium of Example 36, wherein the instructions are further configured to cause the one or more processors to receive the signal representing the second antenna performance value via the interface.
In Example 39, the computer readable medium of any one of Examples 27 to 38, wherein the instructions are further configured to cause the one or more processors to: determine a third antenna performance value for a first antenna of the primary computing device; determine a fourth antenna performance value for a second antenna of the secondary computing device; select the first antenna or the second antenna based on the third antenna performance value and the fourth antenna performance value; if the processor selects the first antenna, control a transceiver of the primary computing device to send a radiofrequency signal over the first antenna; and if that the processor selects the second antenna, control a transceiver of the secondary computing device via the interface to send a radiofrequency signal over the second antenna.
In Example 40, the computer readable medium of any one of Examples 27 to 38, wherein the secondary computing device is a first secondary computing device, and wherein the instructions are further configured to cause the one or more processors to connect to a second secondary computing device and to control a display of the second secondary computing device via the interface; wherein the primary computing device is configured to: determine a third antenna performance value for a first antenna of the primary computing device; determine a fourth antenna performance value for a second antenna of the first secondary computing device; determine a fifth antenna performance value for a third antenna of the second secondary computing device; select the first antenna, the second antenna, or the third antenna based on the third antenna performance value, the fourth antenna performance value, and the fifth antenna performance value; in the case that the processor selects the first antenna, control a transceiver of the primary computing device to send a radiofrequency signal over the first antenna; in the case that the processor selects the second antenna, control a transceiver of the first secondary computing device via the interface to send a radiofrequency signal over the second antenna; and in the case that the processor selects the third antenna, control a transceiver of the second secondary computing device via the interface to send a radiofrequency signal over the third antenna.
In Example 41, the computer readable medium of any one of Examples 27 to 39, wherein the interface is configured as a Thunderbolt interface.
In Example 42, the computer readable medium of any one of Examples 27 to 40, wherein the interface is further configured to transfer data between the primary computing device and a tertiary computing device, external to the primary computing device; wherein the wherein the instructions are further configured to cause the one or more processors to determine a third antenna performance value for a third antenna of the tertiary computing device; wherein, if the processor selects the second antenna, the processors is further configured to control the transceiver of the tertiary computing device via the interface to send a radiofrequency signal over the third antenna.
In Example 43, a non-transitory computer readable medium, including instructions which, if executed, cause one or more processors to: send to the primary computing device via the interface an antenna performance value for an antenna of the secondary computing device; and receive an instruction to permit the primary computing device to control a transceiver of the secondary computing device to send a radiofrequency signal over the antenna.
In Example 44, the computer readable medium of Example 43, wherein the secondary computing device includes a display, and wherein the instructions are further configured to cause the one or more processors to permit the primary computing device to control the display via a signal received via the interface.
In Example 45, the primary computing device of Example 43 or 44, wherein the antenna performance value includes a specific absorption rate of the antenna.
In Example 46, the primary computing device of any one of Examples 43 to 45, wherein the antenna performance value includes a signal strength of a signal received on the antenna.
In Example 47, the primary computing device of any one of Examples 43 to 46, wherein the antenna performance value includes signal strength information according to the Institute of Electrical and Electronics Engineers Standard 802.11 (Wi-Fi standard) of a signal received on the antenna.
In Example 48, the primary computing device of any one of Examples 43 to 47, wherein the antenna performance value is a weighted value based on at least two of a specific absorption rate of the antenna, a signal strength of a signal received on the antenna, or a signal strength information according to the Institute of Electrical and Electronics Engineers Standard 802.11 (Wi-Fi standard) of a signal received on the antenna.
In Example 49, the computer readable medium of Example 43 or 48, wherein the antenna is a first antenna and the antenna performance value is a first antenna performance value, and wherein the instructions are further configured to cause the one or more processors to send to the primary computing device via the interface a second antenna performance value for a second antenna of the secondary computing device; and wherein the instruction is an instruction to permit the primary computing device to control a transceiver of the secondary computing device to send a radiofrequency signal over the first antenna or the second antenna.
In Example 50, the computer readable medium of Example 49, wherein the instructions are further configured to cause the one or more processors to transmit a signal according to the Institute of Electrical and Electronics Engineers Standard 802.11 (Wi-Fi standard) over each of the first antenna and the second antenna.
In Example 51, the computer readable medium of Example 49, wherein the instructions are further configured to cause the one or more processors to transmit a signal according to the Institute of Electrical and Electronics Engineers Standard 802.11 (Wi-Fi standard) over the first antenna and a signal according to a cellular radio access technology over the second antenna.
In Example 52, the computer readable medium of any one of Examples 43 to 51, wherein the secondary computing device further includes a multiplexer, configured to selectively connect the interface to the transceiver, and wherein the secondary computing device is configured to control the multiplexer to connect the interface to the transceiver based on the instruction.
In Example 53, a method including: determining a first antenna performance value for a first antenna of the primary computing device; determining a second antenna performance value for a second antenna of the secondary computing device; selecting the first antenna or the second antenna based on the first antenna performance value and the second antenna performance value; if the processor selects the first antenna, controlling a transceiver of the primary computing device to send a radiofrequency signal over the first antenna; and if the processor selects the second antenna, controlling a transceiver of the secondary computing device via the interface to send a radiofrequency signal over the second antenna.
In Example 54, the method of Example 53, further including controlling a display of the secondary computing device via the interface.
In Example 55, the method of Example 53 or 54, wherein the first antenna performance value includes a specific absorption rate of the first antenna, or further including determining the first antenna performance value based on the specific absorption rate of the first antenna.
In Example 56, the method of any one of Examples 53 to 55, wherein the first antenna performance value includes a signal strength of a first signal received on the first antenna, or further including determining the first antenna performance value based on the signal strength of the first signal received on the first antenna.
In Example 57, the method of any one of Examples 53 to 56, wherein the first antenna performance value includes signal strength information according to the Institute of Electrical and Electronics Engineers Standard 802.11 (Wi-Fi standard) of a first signal received on the first antenna, or further including determining the first antenna performance value based on the signal strength information according to the Wi-Fi standard.
In Example 58, the method of any one of Examples 53 to 57, wherein the second antenna performance value includes a specific absorption rate of the second antenna, or determining the second antenna performance value based on the specific absorption rate of the first antenna.
In Example 59, the method of any one of Examples 53 to 58, wherein the second antenna performance value includes a signal strength of a second signal received on the second antenna, or further including determining the second antenna performance value based on the signal strength of the second signal received on the second antenna.
In Example 60, the method of any one of Examples 53 to 59, wherein the second antenna performance value includes signal strength information according to the Institute of Electrical and Electronics Engineers Standard 802.11 (Wi-Fi standard) of a second signal received on the second antenna, or further including determining the second antenna performance value based on the signal strength information according to the Wi-Fi standard.
In Example 61, the method of any one of Examples 53 to 60, further including determining the first antenna performance value based on at least two of the specific absorption rate of the first antenna, the signal strength of the first antenna, or the signal strength information according to the Institute of Electrical and Electronics Engineers Standard 802.11 (Wi-Fi standard).
In Example 62, the method of Example 61, further including determining the first antenna performance value based on a weighted average the of the at least two of the specific absorption rate of the first antenna, the signal strength of the first antenna, or the signal strength information according to the Wi-Fi standard.
In Example 63, the method of any one of Examples 53 to 61, further including determining the second antenna performance value includes receiving a signal representing the second antenna performance value from the secondary computing device.
In Example 64, the method of Example 62, further including receiving the signal representing the second antenna performance value via the interface.
In Example 65, the method of any one of Examples 53 to 64, further including: determining a third antenna performance value for a first antenna of the primary computing device; determining a fourth antenna performance value for a second antenna of the secondary computing device; selecting the first antenna or the second antenna based on the third antenna performance value and the fourth antenna performance value; if the processor selects the first antenna, controlling a transceiver of the primary computing device to send a radiofrequency signal over the first antenna; and if that the processor selects the second antenna, controlling a transceiver of the secondary computing device via the interface to send a radiofrequency signal over the second antenna.
In Example 66, the method of any one of Examples 53 to 64, wherein the secondary computing device is a first secondary computing device, and wherein the primary computing device is further configured to connect to a second secondary computing device and to control a display of the second secondary computing device via the interface; further including: determining a third antenna performance value for a first antenna of the primary computing device; determining a fourth antenna performance value for a second antenna of the first secondary computing device; determining a fifth antenna performance value for a third antenna of the second secondary computing device; selecting the first antenna, the second antenna, or the third antenna based on the third antenna performance value, the fourth antenna performance value, and the fifth antenna performance value; in the case that the processor selects the first antenna, controlling a transceiver of the primary computing device to send a radiofrequency signal over the first antenna; in the case that the processor selects the second antenna, controlling a transceiver of the first secondary computing device via the interface to send a radiofrequency signal over the second antenna; and in the case that the processor selects the third antenna, controlling a transceiver of the second secondary computing device via the interface to send a radiofrequency signal over the third antenna.
In Example 67, a method including: sending to the primary computing device via the interface an antenna performance value for an antenna of the secondary computing device; and receiving an instruction to permit the primary computing device to control a transceiver of the secondary computing device to send a radiofrequency signal over the antenna.
In Example 68, the method of Example 67, wherein the method includes a display, and further including permitting the primary computing device to control the display via a signal received via the interface.
In Example 69, the primary computing device of Example 67 or 68, wherein the antenna performance value includes a specific absorption rate of the antenna.
In Example 70, the primary computing device of any one of Examples 67 to 69, wherein the antenna performance value includes a signal strength of a signal received on the antenna.
In Example 71, the primary computing device of any one of Examples 67 to 70, wherein the antenna performance value includes signal strength information according to the Institute of Electrical and Electronics Engineers Standard 802.11 (Wi-Fi standard) of a signal received on the antenna.
In Example 72, the primary computing device of any one of Examples 67 to 71, wherein the antenna performance value is a weighted value based on at least two of a specific absorption rate of the antenna, a signal strength of a signal received on the antenna, or a signal strength information according to the Institute of Electrical and Electronics Engineers Standard 802.11 (Wi-Fi standard) of a signal received on the antenna.
In Example 73, the method of Example 67 or 72, wherein the antenna is a first antenna and the antenna performance value is a first antenna performance value, and further including sending to the primary computing device via the interface a second antenna performance value for a second antenna of the secondary computing device; and wherein the instruction is an instruction to permit the primary computing device to control a transceiver of the secondary computing device to send a radiofrequency signal over the first antenna or the second antenna.
In Example 74, the method of Example 73, wherein the method is configured to transmit a signal according to the Institute of Electrical and Electronics Engineers Standard 802.11 (Wi-Fi standard) over each of the first antenna and the second antenna.
In Example 75, the method of Example 73, wherein the secondary computing device is configured to transmit a signal according to the Institute of Electrical and Electronics Engineers Standard 802.11 (Wi-Fi standard) over the first antenna and a signal according to a cellular radio access technology over the second antenna.
In Example 76, the method of any one of Examples 67 to 75, wherein the secondary computing device further includes a multiplexer, configured to selectively connect the interface to the transceiver, and wherein the secondary computing device is configured to control the multiplexer to connect the interface to the transceiver based on the instruction.
In Example 77, a user device, including: a first baseband modem, configured to generate a signal for transmission in a cellular network according to a first radio communication protocol; a second baseband modem, configured to generate a signal for transmission in a local area network according to a second radio communication protocol, different from the first radio communication protocol; and one or more processors, configured to: if the wireless connection between the user device and the access point for the local area network on the second radio communication protocol satisfies the signal criterion, select data from a processing stack of the first baseband modem according to a data selection criterion and store the selected data in a memory; wherein the second baseband modem is configured to read the selected data from the memory and generate a signal for transmission of the selected data according to the second radio communication protocol.
In Example 78, the user device of Example 77, further including the memory, accessible to each of the first baseband modem and the second baseband modem.
In Example 79, the user device of Example 77 or 78, wherein the first radio communication protocol is a cellular radio communication protocol, and wherein the second radio communication protocol is a radio communication protocol according to the Wi-Fi Alliance (Wi-Fi).
In Example 80, the user device of Example 77 or 78, wherein the first radio communication protocol is a cellular radio communication protocol, and wherein the second radio communication protocol is a radio communication protocol according to the Institute of Electrical and Electronics Engineers Standard 802.11.
In Example 81, the user device of any one of Examples 77 to 80, wherein the one or more processors selecting the data according to the data selection criterion includes the one or more processors selecting data generated by layer two or layer three of a processing stack of the first baseband modem.
In Example 82, the user device of any one of Examples 77 to 81, wherein the one or more processors selecting the data according to the data selection criterion includes the one or more processors selecting data generated by an application layer of a processing stack of the first baseband modem.
In Example 83, the user device of any one of Examples 77 to 82, further including a specific absorption rate sensor, wherein the one or more processors selecting the data according to the data selection criterion includes the one or more processors selecting data when a sensor value of the specific absorption rate sensor is outside of a predetermined range.
In Example 84, the user device of Example 83, further including the one or more processors selecting the data generated by an application layer of a processing stack of the first baseband modem that satisfy a latency tolerance requirement.
In Example 85, the user device of any one of Examples 77 to 84, further including a battery sensor, configured to determine an available battery resource of a battery of the user device, wherein the one or more processors selecting the data according to the data selection criterion includes the one or more processors selecting data when a battery resource value is outside of a predetermined range.
In Example 86, the user device of any one of Examples 77 to 85, wherein the one or more processors are further configured to append the selected data with a header according to the second radio communication protocol.
In Example 87, the user device of Example 86, wherein appending the selected data with a header includes appending the selected data with an address corresponding to a device of the first radio network.
In Example 88, the user device of Example 87, wherein the header includes an address of a first radio access device operating according to the first radio communication protocol.
In Example 89, the user device of any one of Examples 77 to 88, wherein the second baseband modem is configured to transmit with a lower transmit power than the first baseband modem.
In Example 90, the user device of any one of Examples 77 to 89, wherein the signal criterion is a signal strength of a wireless signal between the user device and the access point of the wireless local area network.
In Example 91, a radiofrequency communication network, including: a wireless communication node, configured to send radiofrequency signals according to a cellular radio access technology; a server, configured to receive data according to an internet protocol; one or more processors, configured to: control the wireless communication node to send a radiofrequency signal representing a data packet including a destination address corresponding to a user device; and receive from the server an internet protocol packet from the user device.
In Example 92, a non-transitory computer readable medium, including instructions which, if executed, cause one or more processors to: control a first baseband modem to generate a signal for transmission in a cellular network according to a first radio communication protocol; control a second baseband modem to generate a signal for transmission in a local area network according to a second radio communication protocol, different from the first radio communication protocol; if the wireless connection between the user device and the access point for the local area network on the second radio communication protocol satisfies the signal criterion, select data from a processing stack of the first baseband modem according to a data selection criterion and store the selected data in a memory; wherein the second baseband modem is configured to read the selected data from the memory and generate a signal for transmission of the selected data according to the second radio communication protocol.
In Example 93, the computer readable medium of Example 92 or 92, wherein the first radio communication protocol is a cellular radio communication protocol, and wherein the second radio communication protocol is a radio communication protocol according to the Wi-Fi Alliance (Wi-Fi).
In Example 94, the computer readable medium of Example 92 or 92, wherein the first radio communication protocol is a cellular radio communication protocol, and wherein the second radio communication protocol is a radio communication protocol according to the Institute of Electrical and Electronics Engineers Standard 802.11.
In Example 95, the computer readable medium of any one of Examples 92 to 94, wherein selecting the data according to the data selection criterion includes the instructions being configured to cause the one or more processors selecting data generated by layer two or layer three of a processing stack of the first baseband modem.
In Example 96, the computer readable medium of any one of Examples 92 to 95, wherein selecting the data according to the data selection criterion includes the instructions being configured to cause the one or more processors to select data generated by an application layer of a processing stack of the first baseband modem.
In Example 97, the computer readable medium of any one of Examples 92 to 96, wherein selecting the data according to the data selection criterion includes instructions being configured to cause the one or more processors to select data when a sensor value of a specific absorption rate sensor is outside of a predetermined range.
In Example 98, the computer readable medium of Example 97, wherein the instructions are further configured to cause the one or more processors to select the data generated by an application layer of a processing stack of the first baseband modem that satisfy a latency tolerance requirement.
In Example 99, the computer readable medium of any one of Examples 92 to 98, wherein selecting the data according to the data selection criterion includes the instructions being configured to cause the one or more processors to select data when a battery resource value is outside of a predetermined range.
In Example 100, the computer readable medium of any one of Examples 92 to 99, wherein the instructions are further configured to cause the one or more processors to append the selected data with a header according to the second radio communication protocol.
In Example 101, the computer readable medium of Example 100, wherein appending the selected data with a header includes appending the selected data with an address corresponding to a device of the first radio network.
In Example 102, the computer readable medium of Example 101, wherein the header includes an address of a first radio access device operating according to the first radio communication protocol.
In Example 103, the computer readable medium of any one of Examples 92 to 102, wherein the signal criterion is a signal strength of a wireless signal between the user device and the access point of the wireless local area network.
In Example 104, a non-transitory computer readable medium, including instructions which, if executed, cause one or more processors to: control a wireless communication node to send radiofrequency signals according to a cellular radio access technology; control a server to receive data according to an internet protocol; control the wireless communication node to send a radiofrequency signal representing a data packet including a destination address corresponding to a user device; and receive from the server an internet protocol packet from the user device.
In Example 105, a method including: generating a signal for transmission in a cellular network according to a first radio communication protocol; generating a signal for transmission in a local area network according to a second radio communication protocol, different from the first radio communication protocol; and if the wireless connection between the user device and the access point for the local area network on the second radio communication protocol satisfies the signal criterion, selecting data from a processing stack of the first baseband modem according to a data selection criterion and store the selected data in a memory; wherein the second baseband modem is configured to read the selected data from the memory and generate a signal for transmission of the selected data according to the second radio communication protocol.
In Example 106, the method of Example 105 or 105, wherein the first radio communication protocol is a cellular radio communication protocol, and wherein the second radio communication protocol is a radio communication protocol according to the Wi-Fi Alliance (Wi-Fi).
In Example 107, the method of Example 105 or 105, wherein the first radio communication protocol is a cellular radio communication protocol, and wherein the second radio communication protocol is a radio communication protocol according to the Institute of Electrical and Electronics Engineers Standard 802.11.
In Example 108, the method of any one of Examples 105 to 107, wherein selecting the data according to the data selection criterion includes selecting data generated by layer two or layer three of a processing stack of the first baseband modem.
In Example 109, the method of any one of Examples 105 to 108, wherein selecting the data according to the data selection criterion includes selecting data generated by an application layer of a processing stack of the first baseband modem.
In Example 110, the method of any one of Examples 105 to 109, further including a specific absorption rate sensor, wherein selecting the data according to the data selection criterion includes selecting data when a sensor value of the specific absorption rate sensor is outside of a predetermined range.
In Example 111, the method of Example 110, further including selecting the data generated by an application layer of a processing stack of the first baseband modem that satisfy a latency tolerance requirement.
In Example 112, the method of any one of Examples 105 to 111, further including determining an available battery resource of a battery of the user device, wherein selecting the data according to the data selection criterion includes selecting data when a battery resource value is outside of a predetermined range.
In Example 113, the method of any one of Examples 105 to 112, further including appending the selected data with a header according to the second radio communication protocol.
In Example 114, the method of Example 113, wherein appending the selected data with a header includes appending the selected data with an address corresponding to a device of the first radio network.
In Example 115, the method of Example 114, wherein the header includes an address of a first radio access device operating according to the first radio communication protocol.
In Example 116, the method of any one of Examples 105 to 115, wherein the second baseband modem is configured to transmit with a lower transmit power than the first baseband modem.
In Example 117, the method of any one of Examples 105 to 116, wherein the signal criterion is a signal strength of a wireless signal between the user device and the access point of the wireless local area network.
In Example 118, a secondary device, including: one or more processors, configured to: wirelessly connect to a base station according to a first radio communication protocol; wirelessly connect to a user device according to a second radio communication protocol; control a receiver to enter an inactive mode during a first duration according to the first radio communication protocol; control the receiver to enter an active listening mode during a second duration according to the first radio communication protocol; and receive from the user device during the second duration a radiofrequency signal according to the second radio communication protocol, the radiofrequency signal representing a measurement by the user device of a signal transmitted by the base station during the first duration.
In Example 119, the secondary device of Example 118, wherein the first radio communication protocol is a protocol according to Wi-Fi Alliance or a cellular radio access communication protocol.
In Example 120, the secondary device of Example 119, wherein the first duration corresponds to a scheduled beacon transmission from the base station according to the first radio communication protocol.
In Example 121, the secondary device of Example 119, wherein the first duration corresponds to a scheduled MIB transmission from the base station according to the first radio communication protocol.
In Example 122, the secondary device of Example 120 or 121, wherein the first duration corresponds to one or more scheduled SIB transmissions from the base station according to the first radio communication protocol.
In Example 123, the secondary device of any one of Examples 118 to 122, wherein the first radio communication protocol is a protocol according to Wi-Fi Alliance or a cellular radio access communication protocol.
In Example 124, the secondary device of Example 118 or 123, wherein the second radio communication protocol is a peer to peer networking protocol.
In Example 125, the secondary device of any one of Examples 118 to 124, wherein the one or more processors are configured to determine whether a distance between the primary device and the secondary device is outside of a range, and if the distance is outside of the range, the one or more processors are configured to control the receiver to enter an active listening mode during a next first duration according to the first radio communication protocol.
In Example 126, the secondary device of any one of Examples 118 to 125, wherein the one or more processors are configured to determine whether a relative distance between the primary device and the secondary device increases, and if the relative distance increases, the one or more processors are configured to control the receiver to enter an active listening mode during a next first duration according to the first radio communication protocol.
In Example 127, the secondary device of any one of Examples 118 to 126, wherein the one or more processors are configured to determine whether the secondary device is engaged in an active voice communication, and if the one or more processors determine that the secondary device is engaged in an active voice communication, the one or more processors are configured to control the receiver to enter an active listening mode during a next first duration according to the first radio communication protocol.
In Example 128, the secondary device of any one of Examples 118 to 127, wherein the one or more processors are configured to determine whether a current time is within a first range, and any of whether a distance between the primary device and the secondary device is outside of a second range, whether a relative distance between the primary device and the secondary device increases, or whether the secondary device is engaged in an active voice communication; and if the one or more processors determine that the current time is within the first range and any of the distance between the primary device and the secondary device is outside of the second range, the relative distance between the primary device and the secondary device increases, or the secondary device is engaged in an active voice communication; the one or more processors are configured to control the receiver to enter an active listening mode during a next first duration according to the first radio communication protocol.
In Example 129, the secondary device of any one of Examples 118 to 128, wherein the inactive mode is a standby mode or a sleep mode.
In Example 130, the secondary device of any one of Examples 118 to 129, wherein the one or more processors are further configured to determine whether a screen of the secondary device is active, and if the screen is active, to control the receiver to enter an active listening mode during a subsequent first duration according to the first radio communication protocol.
In Example 131, a primary device, including: one or more processors, configured to: wirelessly connect to a base station according to a first radio communication protocol; wirelessly connect to a secondary device according to a second radio communication protocol; perform a network scanning operation during a first duration according to the first radio communication protocol; control a transmitter during to send the secondary device during a second duration a radiofrequency signal representing a measurement by the primary device of a signal transmitted by the base station during the first duration.
In Example 132, the primary device of Example 131, wherein the first radio communication protocol is a protocol according to Wi-Fi Alliance or a cellular radio access communication protocol.
In Example 133, the primary device of Example 131 or 132, wherein the second radio communication protocol is a peer to peer networking protocol.
In Example 134, the primary device of any one of Examples 131 to 133, wherein the first duration corresponds to a scheduled beacon transmission from the base station according to the first radio communication protocol.
In Example 135, the primary device of any one of Examples 131 to 134, wherein the first duration corresponds to a scheduled MIB transmission from the base station according to the first radio communication protocol.
In Example 136, the primary device of any one of Examples 131 to 134, wherein the first duration corresponds to one or more scheduled SIB transmissions from the base station according to the first radio communication protocol.
In Example 137, the primary device of any one of Examples 131 to 136, wherein the one or more processors are configured to determine whether a distance between the primary device and the secondary device is outside of a range, and if the distance is outside of the range, the one or more processors are configured to control the transmitter to send an instruction for the secondary device to perform the scanning operation.
In Example 138, the primary device of any one of Examples 131 to 137, wherein the one or more processors are configured to determine whether a relative distance between the primary device and the secondary device increases, and if the relative distance increases, the one or more processors are configured to control the transmitter to send the secondary device an instruction to enter an active listening mode during a next first duration according to the first radio communication protocol.
In Example 139, the primary device of any one of Examples 131 to 138, wherein the one or more processors are configured to determine whether the secondary device is engaged in an active voice communication, and if the one or more processors determine that the secondary device is engaged in an active voice communication, the one or more processors are configured to control the transmitter to send an instruction to the secondary device to enter an active listening mode during a next first duration according to the first radio communication protocol.
In Example 140, the primary device of any one of Examples 131 to 139, wherein the one or more processors are configured to determine whether a current time is within a first range, and any of whether a distance between the primary device and the secondary device is outside of a second range, whether a relative distance between the primary device and the secondary device increases, or whether the primary device is engaged in an active voice communication; and if the one or more processors determine that the current time is within the first range and any of the distance between the primary device and the secondary device is outside of the second range, the relative distance between the primary device and the secondary device increases, or the primary device is engaged in an active voice communication; the one or more processors are configured to control the transmitter to send an instruction to the secondary device to enter an active listening mode during a next first duration according to the first radio communication protocol.
In Example 141, the primary device of any one of Examples 131 to 140, wherein the inactive mode is a standby mode or a sleep mode.
In Example 142, the primary device of any one of Examples 131 to 141, wherein the one or more processors are further configured to: perform the network scanning operation during a third duration according to the first radio communication protocol; determine whether a difference between a result of the network scanning operation during the first duration and a result of the network scanning operation during the second duration; if the different is outside of a range, control the transmitter to send during the second duration a radiofrequency signal representing a measurement by the primary device of a signal transmitted by the base station during the third duration; and if the different is with the range, send no measurement of the signal transmitted by the base station during the third duration.
In Example 143, the primary device of any one of Examples 131 to 142, wherein the one or more processors are further configured to repeat the network scanning operation at an interval.
In Example 144, the primary device of Example 143, wherein the one or more processors are configured to dynamically adjust the interval based on any of a time of day, a histogram of activities of the secondary device, a similarity of a result of the network scan and a subsequent network scan.
In Example 145, a non-transitory computer readable medium, including instructions which, if executed by one or more processors of a secondary device, cause the one or more processors to: wirelessly connect to a base station according to a first radio communication protocol; wirelessly connect to a user device according to a second radio communication protocol; control a receiver to enter an inactive mode during a first duration according to the first radio communication protocol; control the receiver to enter an active listening mode during a second duration according to the first radio communication protocol; and receive from the user device during the second duration a radiofrequency signal according to the second radio communication protocol, the radiofrequency signal representing a measurement by the user device of a signal transmitted by the base station during the first duration.
In Example 146, the computer readable medium of Example 145, wherein the first radio communication protocol is a protocol according to Wi-Fi Alliance or a cellular radio access communication protocol.
In Example 147, the computer readable medium of Example 146, wherein the first duration corresponds to a scheduled beacon transmission from the base station according to the first radio communication protocol.
In Example 148, the computer readable medium of Example 146, wherein the first duration corresponds to a scheduled MIB transmission from the base station according to the first radio communication protocol.
In Example 149, the computer readable medium of Example 147 or 148, wherein the first duration corresponds to one or more scheduled SIB transmissions from the base station according to the first radio communication protocol.
In Example 150, the computer readable medium of any one of Examples 145 to 149, wherein the first radio communication protocol is a protocol according to Wi-Fi Alliance or a cellular radio access communication protocol.
In Example 151, the computer readable medium of Example 145 or 150, wherein the second radio communication protocol is a peer to peer networking protocol.
In Example 152, the computer readable medium of any one of Examples 145 to 151, wherein the instructions are further configured to cause the one or more processors to determine whether a distance between the primary device and the secondary device is outside of a range, and if the distance is outside of the range, cause the one or more processors to control the receiver to enter an active listening mode during a next first duration according to the first radio communication protocol.
In Example 153, the computer readable medium of any one of Examples 145 to 152, wherein the instructions are further configured to cause the one or more processors to determine whether a relative distance between the primary device and the secondary device increases, and if the relative distance increases, cause the one or more processors to control the receiver to enter an active listening mode during a next first duration according to the first radio communication protocol.
In Example 154, the computer readable medium of any one of Examples 145 to 153, wherein the instructions are further configured to cause the one or more processors to determine whether the secondary device is engaged in an active voice communication, and if the one or more processors determine that the secondary device is engaged in an active voice communication, the instructions are further configured to cause the one or more processors to control the receiver to enter an active listening mode during a next first duration according to the first radio communication protocol.
In Example 155, the computer readable medium of any one of Examples 145 to 154, wherein the instructions are further configured to cause the one or more processors to determine whether a current time is within a first range, and any of whether a distance between the primary device and the secondary device is outside of a second range, whether a relative distance between the primary device and the secondary device increases, or whether the secondary device is engaged in an active voice communication; and if the one or more processors determine that the current time is within the first range and any of the distance between the primary device and the secondary device is outside of the second range, the relative distance between the primary device and the secondary device increases, or the secondary device is engaged in an active voice communication; the instructions are further configured to cause the one or more processors to control the receiver to enter an active listening mode during a next first duration according to the first radio communication protocol.
In Example 156, the computer readable medium of any one of Examples 145 to 155, wherein the inactive mode is a standby mode or a sleep mode.
In Example 157, the computer readable medium of any one of Examples 145 to 156, wherein the instructions are further configured to cause the one or more processors to determine whether a screen of the secondary device is active, and if the screen is active, to control the receiver to enter an active listening mode during a subsequent first duration according to the first radio communication protocol.
In Example 158, a non-transitory computer readable medium, including instructions which, if executed cause one or more processors of a primary device to: wirelessly connect to a base station according to a first radio communication protocol; wirelessly connect to a secondary device according to a second radio communication protocol; perform a network scanning operation during a first duration according to the first radio communication protocol; and control a transmitter during to send the secondary device during a second duration a radiofrequency signal representing a measurement by the primary device of a signal transmitted by the base station during the first duration.
In Example 159, the computer readable medium of Example 158, wherein the first radio communication protocol is a protocol according to Wi-Fi Alliance or a cellular radio access communication protocol.
In Example 160, the computer readable medium of Example 158 or 159, wherein the second radio communication protocol is a peer to peer networking protocol.
In Example 161, the computer readable medium of any one of Examples 158 to 160, wherein the first duration corresponds to a scheduled beacon transmission from the base station according to the first radio communication protocol.
In Example 162, the computer readable medium of any one of Examples 158 to 161, wherein the first duration corresponds to a scheduled MIB transmission from the base station according to the first radio communication protocol.
In Example 163, the computer readable medium of any one of Examples 158 to 161, wherein the first duration corresponds to one or more scheduled SIB transmissions from the base station according to the first radio communication protocol.
In Example 164, the computer readable medium of any one of Examples 158 to 163, wherein the instructions are further configured to cause the one or more processors to determine whether a distance between the primary device and the secondary device is outside of a range, and if the distance is outside of the range, to cause the one or more processors to control the transmitter to send an instruction for the secondary device to perform the scanning operation.
In Example 165, the computer readable medium of any one of Examples 158 to 164, wherein the instructions are further configured to cause the one or more processors to whether a relative distance between the primary device and the secondary device increases, and if the relative distance increases, to cause the one or more processors to control the transmitter to send the secondary device an instruction to enter an active listening mode during a next first duration according to the first radio communication protocol.
In Example 166, the computer readable medium of any one of Examples 158 to 165, wherein the instructions are further configured to cause the one or more processors to determine whether the secondary device is engaged in an active voice communication, and if the one or more processors determine that the secondary device is engaged in an active voice communication, the instructions are further configured to cause the one or more processors to control the transmitter to send an instruction to the secondary device to enter an active listening mode during a next first duration according to the first radio communication protocol.
In Example 167, the computer readable medium of any one of Examples 158 to 166, wherein the instructions are further configured to cause the one or more processors to determine whether a current time is within a first range, and any of whether a distance between the primary device and the secondary device is outside of a second range, whether a relative distance between the primary device and the secondary device increases, or whether the primary device is engaged in an active voice communication; and if the one or more processors determine that the current time is within the first range and any of the distance between the primary device and the secondary device is outside of the second range, the relative distance between the primary device and the secondary device increases, or the primary device is engaged in an active voice communication; the instructions are further configured to cause the one or more processors to control the transmitter to send an instruction to the secondary device to enter an active listening mode during a next first duration according to the first radio communication protocol.
In Example 168, the computer readable medium of any one of Examples 158 to 167, wherein the inactive mode is a standby mode or a sleep mode.
In Example 169, the computer readable medium of any one of Examples 158 to 168, wherein the instructions are further configured to cause the one or more processors to: perform the network scanning operation during a third duration according to the first radio communication protocol; determine whether a difference between a result of the network scanning operation during the first duration and a result of the network scanning operation during the second duration; if the different is outside of a range, control the transmitter to send during the second duration a radiofrequency signal representing a measurement by the primary device of a signal transmitted by the base station during the third duration; and if the different is with the range, send no measurement of the signal transmitted by the base station during the third duration.
In Example 170, the computer readable medium of any one of Examples 158 to 169, wherein the instructions are further configured to cause the one or more processors to repeat the network scanning operation at an interval.
In Example 171, the computer readable medium of Example 170, wherein the instructions are further configured to cause the one or more processors to dynamically adjust the interval based on any of a time of day, a histogram of activities of the secondary device, a similarity of a result of the network scan and a subsequent network scan.
In Example 172, a method of operating a secondary device, including: wirelessly connecting to a base station according to a first radio communication protocol; wirelessly connecting to a user device according to a second radio communication protocol; controlling a receiver to enter an inactive mode during a first duration according to the first radio communication protocol; controlling the receiver to enter an active listening mode during a second duration according to the first radio communication protocol; and receiving from the user device during the second duration a radiofrequency signal according to the second radio communication protocol, the radiofrequency signal representing a measurement by the user device of a signal transmitted by the base station during the first duration.
In Example 173, the method of Example 172, wherein the first radio communication protocol is a protocol according to Wi-Fi Alliance or a cellular radio access communication protocol.
In Example 174, the method of Example 173, wherein the first duration corresponds to a scheduled beacon transmission from the base station according to the first radio communication protocol.
In Example 175, the method of Example 173, wherein the first duration corresponds to a scheduled MIB transmission from the base station according to the first radio communication protocol.
In Example 176, the method of Example 174 or 175, wherein the first duration corresponds to one or more scheduled SIB transmissions from the base station according to the first radio communication protocol.
In Example 177, the method of any one of Examples 172 to 176, wherein the first radio communication protocol is a protocol according to Wi-Fi Alliance or a cellular radio access communication protocol.
In Example 178, the method of Example 172 or 177, wherein the second radio communication protocol is a peer to peer networking protocol.
In Example 179, the method of any one of Examples 172 to 178, further including determining whether a distance between the primary device and the secondary device is outside of a range, and if the distance is outside of the range, controlling the receiver to enter an active listening mode during a next first duration according to the first radio communication protocol.
In Example 180, the method of any one of Examples 172 to 179, further including determining whether a relative distance between the primary device and the secondary device increases, and if the relative distance increases, controlling the receiver to enter an active listening mode during a next first duration according to the first radio communication protocol.
In Example 181, the method of any one of Examples 172 to 180, further including determining whether the secondary device is engaged in an active voice communication, and if the secondary device is engaged in an active voice communication, controlling the receiver to enter an active listening mode during a next first duration according to the first radio communication protocol.
In Example 182, the method of any one of Examples 172 to 181, further including determining whether a current time is within a first range, and any of whether a distance between the primary device and the secondary device is outside of a second range, whether a relative distance between the primary device and the secondary device increases, or whether the secondary device is engaged in an active voice communication; and if the current time is within the first range and any of the distance between the primary device and the secondary device is outside of the second range, the relative distance between the primary device and the secondary device increases, or the secondary device is engaged in an active voice communication; controlling the receiver to enter an active listening mode during a next first duration according to the first radio communication protocol.
In Example 183, the method of any one of Examples 172 to 182, wherein the inactive mode is a standby mode or a sleep mode.
In Example 184, the method of any one of Examples 172 to 183, further including determining whether a screen of the secondary device is active, and if the screen is active, controlling the receiver to enter an active listening mode during a subsequent first duration according to the first radio communication protocol.
In Example 185, a method of operating a primary device, including: one or more processors, configured to: wirelessly connect to a base station according to a first radio communication protocol; wirelessly connect to a secondary device according to a second radio communication protocol; perform a network scanning operation during a first duration according to the first radio communication protocol; control a transmitter during to send the secondary device during a second duration a radiofrequency signal representing a measurement by the primary device of a signal transmitted by the base station during the first duration.
In Example 186, the method of Example 185, wherein the first radio communication protocol is a protocol according to Wi-Fi Alliance or a cellular radio access communication protocol.
In Example 187, the method of Example 185 or 186, wherein the second radio communication protocol is a peer to peer networking protocol.
In Example 188, the method of any one of Examples 185 to 187, wherein the first duration corresponds to a scheduled beacon transmission from the base station according to the first radio communication protocol.
In Example 189, the method of any one of Examples 185 to 188, wherein the first duration corresponds to a scheduled MIB transmission from the base station according to the first radio communication protocol.
In Example 190, the method of any one of Examples 185 to 188, wherein the first duration corresponds to one or more scheduled SIB transmissions from the base station according to the first radio communication protocol.
In Example 191, the method of any one of Examples 185 to 190, further including determining whether a distance between the primary device and the secondary device is outside of a range, and if the distance is outside of the range, controlling the transmitter to send an instruction for the secondary device to perform the scanning operation.
In Example 192, the method of any one of Examples 185 to 191, further including determining whether a relative distance between the primary device and the secondary device increases, and if the relative distance increases, controlling the transmitter to send the secondary device an instruction to enter an active listening mode during a next first duration according to the first radio communication protocol.
In Example 193, the method of any one of Examples 185 to 192, further including determining whether the secondary device is engaged in an active voice communication, and if the one or more processors determine that the secondary device is engaged in an active voice communication, controlling the transmitter to send an instruction to the secondary device to enter an active listening mode during a next first duration according to the first radio communication protocol.
In Example 194, the method of any one of Examples 185 to 193, further including determining whether a current time is within a first range, and any of whether a distance between the primary device and the secondary device is outside of a second range, whether a relative distance between the primary device and the secondary device increases, or whether the primary device is engaged in an active voice communication; and if the current time is within the first range and any of the distance between the primary device and the secondary device is outside of the second range, the relative distance between the primary device and the secondary device increases, or the primary device is engaged in an active voice communication; controlling the transmitter to send an instruction to the secondary device to enter an active listening mode during a next first duration according to the first radio communication protocol.
In Example 195, the method of any one of Examples 185 to 194, wherein the inactive mode is a standby mode or a sleep mode.
In Example 196, the method of any one of Examples 185 to 195, further including: performing the network scanning operation during a third duration according to the first radio communication protocol; determining whether a difference between a result of the network scanning operation during the first duration and a result of the network scanning operation during the second duration; if the different is outside of a range, controlling the transmitter to send during the second duration a radiofrequency signal representing a measurement by the primary device of a signal transmitted by the base station during the third duration; and if the different is with the range, sending no measurement of the signal transmitted by the base station during the third duration.
In Example 197, the method of any one of Examples 185 to 196, further including repeating the network scanning operation at an interval.
In Example 198, the method of Example 197, further including dynamically adjusting the interval based on any of a time of day, a histogram of activities of the secondary device, a similarity of a result of the network scan and a subsequent network scan.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A primary computing device comprising:
an interface, configured to transfer data between the primary computing device and a secondary computing device, external to the primary computing device; and
a processor, configured to:
determine a first antenna performance value for a first antenna of the primary computing device;
determine a second antenna performance value for a second antenna of the secondary computing device;
select the first antenna or the second antenna based on the first antenna performance value and the second antenna performance value;
if the processor selects the first antenna, control a transceiver of the primary computing device to send a radiofrequency signal over the first antenna; and
if the processor selects the second antenna, control a transceiver of the secondary computing device via the interface to send a radiofrequency signal over the second antenna.

2. The primary computing device of claim 1, wherein the primary computing device is further configured to control a display of the secondary computing device via the interface.

3. The primary computing device of claim 1 or 2, wherein the first antenna performance value comprises a specific absorption rate of the first antenna, or wherein the processor is configured to determine the first antenna performance value based on the specific absorption rate of the first antenna.

4. The primary computing device of any one of claims 1 to 3, wherein the first antenna performance value comprises a signal strength of a first signal received on the first antenna, or wherein the processor is configured to determine the first antenna performance value based on the signal strength of the first signal received on the first antenna.

5. The primary computing device of any one of claims 1 to 4, wherein the second antenna performance value comprises a specific absorption rate of the second antenna, or wherein the processor is configured to determine the second antenna performance value based on the specific absorption rate of the first antenna.

6. The primary computing device of any one of claims 1 to 5, wherein the second antenna performance value comprises a signal strength of a second signal received on the second antenna or wherein the processor is configured to determine the second antenna performance value based on the signal strength of the second signal received on the second antenna.

7. The primary computing device of any one of claims 1 to 5, wherein determining the second antenna performance value comprises receiving a signal representing the second antenna performance value from the secondary computing device.

8. The primary computing device of claim 6, wherein the primary computing device is configured to receive the signal representing the second antenna performance value via the interface.

9. The primary computing device of any one of claims 1 to 8, wherein the processor is further configured to:
determine a third antenna performance value for a first antenna of the primary computing device;
determine a fourth antenna performance value for a second antenna of the secondary computing device;
select the first antenna or the second antenna based on the third antenna performance value and the fourth antenna performance value;
if the processor selects the first antenna, control a transceiver of the primary computing device to send a radiofrequency signal over the first antenna; and
if that the processor selects the second antenna, control a transceiver of the secondary computing device via the interface to send a radiofrequency signal over the second antenna.

10. The primary computing device of any one of claims 1 to 8, wherein the secondary computing device is a first secondary computing device, and wherein the primary computing device is further configured to connect to a second secondary computing device and to control a display of the second secondary computing device via the interface; wherein the primary computing device is configured to:
determine a third antenna performance value for a first antenna of the primary computing device;
determine a fourth antenna performance value for a second antenna of the first secondary computing device;
determine a fifth antenna performance value for a third antenna of the second secondary computing device;
select the first antenna, the second antenna, or the third antenna based on the third antenna performance value, the fourth antenna performance value, and the fifth antenna performance value;
in the case that the processor selects the first antenna, control a transceiver of the primary computing device to send a radiofrequency signal over the first antenna;
in the case that the processor selects the second antenna, control a transceiver of the first secondary computing device via the interface to send a radiofrequency signal over the second antenna; and
in the case that the processor selects the third antenna, control a transceiver of the second secondary computing device via the interface to send a radiofrequency signal over the third antenna.

11. The primary computing device of any one of claims 1 to 9, wherein the interface is configured as a Thunderbolt interface; or
wherein the interface is further configured to transfer data between the primary computing device and a tertiary computing device, external to the primary computing device;
wherein the processor is configured to determine a third antenna performance value for a third antenna of the tertiary computing device; wherein, if the processor selects the second antenna, the processors is further configured to control the transceiver of the tertiary computing device via the interface to send a radiofrequency signal over the third antenna.

12. A secondary computing device comprising:
an interface, configured to transfer data between the secondary computing device and a primary computing device, external to the secondary computing device; and
a processor, configured to:
send to the primary computing device via the interface an antenna performance value for an antenna of the secondary computing device; and
receive an instruction to permit the primary computing device to control a transceiver of the secondary computing device to send a radiofrequency signal over the antenna.

13. The secondary computing device of claim 12, wherein the secondary computing device comprises a display, and wherein the secondary computing device is configured to permit the primary computing device to control the display via a signal received via the interface.

14. A non-transitory computer readable medium, comprising instructions which, if executed, cause one or more processors to:
determine a first antenna performance value for a first antenna of the primary computing device;
determine a second antenna performance value for a second antenna of the secondary computing device;
select the first antenna or the second antenna based on the first antenna performance value and
the second antenna performance value;
if the processor selects the first antenna, control a transceiver of the primary computing device to send a radiofrequency signal over the first antenna; and
if the processor selects the second antenna, control a transceiver of the secondary computing device via an interface connecting the primary computing device and the secondary computing device to send a radiofrequency signal over the second antenna.

15. The computer readable medium of claim 14, wherein the instructions are further configured to cause the one or more processors to control a display of the secondary computing device via the interface.
